(19) Europäisches Patentamt
European Patent Office
Office européen des brevets

(11) EP 4 625 884 A1

(12) EUROPEAN PATENT APPLICATION
published in accordance with Art. 153(4) EPC

(43) Date of publication:
**01.10.2025 Bulletin 2025/40**

(21) Application number: **23920457.1**

(22) Date of filing: **09.02.2023**

(51) International Patent Classification (IPC):
***H04L 9/40*** *(2022.01)* ***H04L 12/02*** *(2006.01)*

(52) Cooperative Patent Classification (CPC):
**H04L 9/40; H04L 12/02**

(86) International application number:
**PCT/CN2023/075260**

(87) International publication number:
**WO 2024/164249 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
- **DENG, Shuiguang**
  **Hangzhou, Zhejiang 310058 (CN)**
- **CHENG, Guanjie**
  **Hangzhou, Zhejiang 310058 (CN)**
- **WEN, Yingying**
  **Hangzhou, Zhejiang 310058 (CN)**
- **YAN, Xueqiang**
  **Shenzhen, Guangdong 518129 (CN)**
- **XI, Yan**
  **Shenzhen, Guangdong 518129 (CN)**
- **LI, Bo**
  **Hangzhou, Zhejiang 310058 (CN)**
- **WANG, Junfan**
  **Hangzhou, Zhejiang 310058 (CN)**
- **ZHAO, Mingyu**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

# (54) IDENTITY MANAGEMENT METHOD AND APPARATUS

(57) An identity management method and apparatus are disclosed, and may be applied to a scenario with a large quantity of distributed communication nodes, for example, a vehicle-to-everything scenario. The method includes: A TA device determines a pseudonymous identity PID of a terminal device *i,* and sends a first parameter to the terminal device *i,* where the first parameter indicates the PID of the terminal device *i,* and the PID of the terminal device *i* is determined based on a real identity RID of the terminal device *i*. Based on this, the TA device may determine the PID for the terminal device, to protect the RID of the terminal device, in other words, protect privacy of the terminal device. In addition, the PID of the terminal device is associated with the RID of the terminal device, so that the TA device can determine the RID of the terminal device based on the PID of the terminal device, and can determine the real identity of the terminal device when the terminal device performs a malicious operation or an unauthorized operation. That is, the real identity of the terminal device can be obtained while privacy of the terminal device is protected. In other words, conditional privacy protection is implemented.

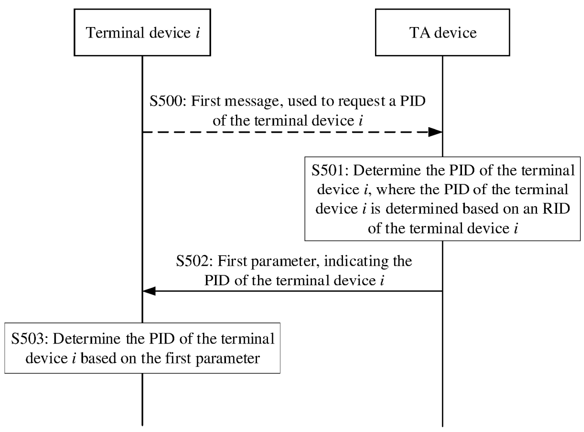


FIG. 5

EP 4 625 884 A1

## Description

### TECHNICAL FIELD

Embodiments of this application relate to the communication field, and in particular, to an identity management method and apparatus.

### BACKGROUND

Maturity of communication technologies and sensing technologies promotes rapid development of vehicle-to-everything applications, making the vehicle-to-everything applications become a focus of current global new infrastructure construction. Vehicle-to-everything may provide various application services for a vehicle based on data capturing and information sharing, to improve road safety and traffic efficiency.

However, because a vehicle-to-everything system is characterized by strong node heterogeneity, a large scale and high density, a high node moving speed, an open communication channel, and the like, communication between nodes in a vehicle-to-everything environment is faced with a huge safety challenge.

### SUMMARY

This application provides an identity management method and apparatus, to obtain a real identity of a terminal device i while protecting privacy of the terminal device, to implement conditional privacy protection.

According to a first aspect, an identity management method is provided. The method may be performed by a trusted authority (trusted authority, TA) device; or may be performed by a component of a TA device, for example, a processor, a chip, or a chip system of the TA device; or may be implemented by a logic module or software that can implement all or some of functions of a TA device. The method includes: determining a pseudonymous identity (pseudonymous identity, PID) of a terminal device *i,* and sending a first parameter to the terminal device *i,* where the first parameter indicates the PID of the terminal device *i,* and the PID of the terminal device *i* is determined based on a real identity (real identity, RID) of the terminal device *i*.

According to this solution, in one aspect, the TA device may determine the PID of the terminal device *i* for the terminal device *i,* to protect the RID of the terminal device *i,* in other words, protect privacy of the terminal device *i.* In another aspect, the PID of the terminal device *i* is associated with the RID of the terminal device *i,* so that the TA device can determine the RID of the terminal device *i* based on the PID of the terminal device *i,* and can determine the real identity of the terminal device *i* when the terminal device *i* performs a malicious operation or an unauthorized operation. That is, the real identity of the terminal device *i* can be obtained while privacy of the terminal device *i* is protected. In other words, conditional privacy protection is implemented. In still another aspect, the TA device sends the first parameter to the terminal device *i* to indicate the PID of the terminal device *i,* so that security and privacy of the PID of the terminal device *i* during transmission in a network are protected. This effectively prevents a malicious node from intercepting the PID of the terminal device *i* to perform an unauthorized operation by masquerading as the terminal device *i.*

In a possible design, the method further includes: storing PID information of the terminal device i by using a distributed ledger technology.

According to this possible design, the PID information of the terminal device is stored by using the distributed ledger technology. Therefore, a secure, transparent, decentralized, scalable, and anti-single-point-attack identity management mechanism can be implemented based on characteristics of a distributed ledger, to avoid certificate management overheads caused by a PKI system and a key escrow issue caused by an IBE solution.

In a possible design, storing the PID information of the terminal device *i* by using the distributed ledger technology includes: storing a sparse Merkle tree (sparse Merkle tree, SMT) by using the distributed ledger technology; and storing the PID information of the terminal device *i* on a leaf node with an index of (2*i* - 1) in the SMT.

In a possible design, the method further includes: storing a status of the PID information of the terminal device i by using the distributed ledger technology, where the status includes revoked or valid.

According to this possible design, the status of the PID information of the terminal device is stored by using the distributed ledger technology, so that the PID information of the terminal device can be revoked, in other words, the pseudonymous identity can be revoked. In this way, when a specific terminal device performs an unauthorized operation or a malicious attack, a pseudonymous identity of the terminal device can be revoked, so that supervision efficiency for unauthorized behavior in a system is improved.

In a possible design, storing the status of the PID information of the terminal device *i* by using the distributed ledger technology includes: storing the SMT by using the distributed ledger technology; and storing the status of the PID information of the terminal device *i* on a leaf node with an index of (2*i*) in the SMT.

According to this possible design, validity and effectiveness of the pseudonymous identity of the terminal device

may be queried and verified by using an open distributed ledger, to implement validity verification on the pseudonymous identity of the terminal device.

In a possible design, determining the PID of the terminal device *i* includes: when a real identity list includes the RID of the terminal device *i* and no PID information of the terminal device *i* is stored by using the distributed ledger technology, determining the PID of the terminal device *i.*

According to this possible design, checking is performed based on the real identity list, to prevent the TA device from determining a PID for an unauthorized terminal device (for example, the real identity list does not include an RID of the terminal device). In addition, whether the PID information of the terminal device *i* is stored by using the distributed ledger technology is checked, to avoid an unnecessary waste of computing resources caused by repeatedly determining the PID of the terminal device *i* by the TA device.

In a possible design, that the PID of the terminal device *i* is determined based on the RID of the terminal device *i* includes: The PID of the terminal device *i* is determined based on the RID of the terminal device i and at least one of the following: a master private key *s* of the TA device, a first hash function $H_1$, or a first timestamp $T_0$, where the first timestamp $T_0$ is a timestamp carried in a first message that is from the terminal device i, and the first message is used to request the PID of the terminal device *i.*

According to this possible design, when the master private key of the TA device participates in determining the PID of the terminal device *i,* because the master private key of the TA device is locally stored on the TA, it is quite difficult for another node to obtain the master private key of the TA device, and therefore it is also quite difficult to obtain the RID of the terminal device *i* based on the PID of the terminal device *i.* This further improves a capability of protecting privacy of the terminal device i.

In a possible design, the PID of the terminal device i meets the following relationship:

$$PID_i = RID_i \oplus H_1(s||T_0),$$

where

$PID_i$ represents the PID of the terminal device *i,* $RID_i$ represents the RID of the terminal device i, ⊕ represents an exclusive OR operation, and ‖ is a character string connector.

According to this possible design, when the PID of the terminal device *i* meets the foregoing formula, an exclusive OR operation may be performed on the RID and a hash value of the master private key of the TA device and the timestamp, to obtain the PID of the terminal device *i.* That is, the pseudonymous identity is generated in a simple and efficient manner, and complexity of calculation of the TA device is reduced.

In a possible design, the first parameter is determined based on the PID of the terminal device *i* and the RID of the terminal device *i.*

In a possible design, the method further includes: determining a master public key of the TA device, where the master public key includes a first-part master public key and a second-part master public key, and the master public key is determined based on the master private key of the TA device and a generator of an additive group $G_1$.

In a possible design, the master private key and/or the master public key meet/meets the following relationships:

$$s \in Z_q^*;$$

and

$$P_{pub} = \left(P_{pub1}, P_{pub2}\right) = (sP, s^{-1}P),$$

where

s represents the master private key, $Z_q^*$ represents an integer set with a value range of [1, *q* - 1], *q* is an order of the additive group $G_1$, $P_{pub}$ represents the master public key, $P_{pub1}$ represents the first-part master public key, $P_{pub2}$ represents the second-part master public key, and *P* represents the generator of the additive group $G_1$.

According to this possible design, when the master public key of the TA device meets the foregoing formula, a multiplication operation may be performed on the master private key of the TA device and the generator of the additive group, to obtain the master public key of the TA device. That is, the master public key is generated in a simple and efficient manner, and complexity of calculation of the TA device is reduced.

In a possible design, the method further includes: determining a partial private key $PSK_i$ of the terminal device *i,* and sending a second parameter to the terminal device *i,* where the second parameter indicates the partial private key of the terminal device *i.* The partial private key $PSK_i$ of the terminal device *i* is determined based on at least one of the following: the master private key s of the TA device, the first hash function $H_1$, the RID of the terminal device *i,* the master

public key $P_{pub}$ of the TA device, a second hash function $H_2$, or a first nonce $\lambda_i$, where $\lambda_i \in Z_q^*$, and $Z_q^*$ represents an integer set with a value range of [1, $q$ - 1].

According to this possible design, the TA device sends the second parameter to the terminal device *i* to indicate the partial private key of the terminal device *i,* so that security and privacy of the partial private key of the terminal device i during transmission in a network are protected. This effectively prevents a malicious node from intercepting the partial private key of the terminal device *i* to perform an unauthorized operation by masquerading as the terminal device *i.*

In a possible design, the second parameter includes $(A_i, K_i, \Theta_i)$, and the partial private key is as follows: $PSK_i = (\alpha_i, \kappa_i, \theta_i)$, where

$$A_i = \alpha_i \oplus (RID_i || T_0');$$

$$K_i = \kappa_i \oplus (RID_i || T_0');$$

and

$$\Theta_i = \theta_i \oplus (RID_i || T_0'),$$

where

$\oplus$ represents an exclusive OR operation, and || is a character string connector.

In a possible design, the partial private key of the terminal device *i* is as follows: $PSK_i = (\alpha_i, \kappa_i, \theta_i)$, where $\alpha_i$, $\kappa_i$, and $\theta_i$ meet the following relationships:

$$\alpha_i = s^{-1} + \lambda_i h_i, \text{ and } h_i = H_2(RID_i || P_{pub});$$

$$\kappa_i = \lambda_i H_1(RID_i);$$

and

$$\theta_i = s^{-1} H_1(RID_i),$$

where

$RID_i$ represents the RID of the terminal device *i,* and $\|$ is a character string connector.

In a possible design, the second parameter is determined based on the RID of the terminal device *i* and the partial private key $PSK_i$.

In a possible design, the method further includes: when the terminal device *i* performs an unauthorized operation, setting the status of the PID information of the terminal device *i* to revoked.

According to this possible design, when the terminal device *i* performs an unauthorized operation, the PID information of the terminal device can be revoked, in other words, the pseudonymous identity can be revoked. In this way, when a specific terminal device performs an unauthorized operation or a malicious attack, a pseudonymous identity of the terminal device can be revoked, so that supervision efficiency for unauthorized behavior in a system is improved.

In a possible design, the method further includes: when the terminal device *i* performs an unauthorized operation, determining the RID of the terminal device i based on the PID of the terminal device *i.*

According to this possible design, because a real identity of a terminal device that performs an unauthorized operation can be determined, a related limitation or punishment or the like may be performed on the terminal device, to improve security performance.

In a possible design, the method further includes: adding remarks about the unauthorized operation of the terminal device *i* in the real identity list.

According to this possible design, the TA device adds remarks about the unauthorized operation of the terminal device *i.* This facilitates subsequent management of the terminal device *i* and the like. For example, authorization related to the unauthorized operation of the terminal device *i* may be revoked, to further improve security performance.

In a possible design, the PID information of the terminal device *i* is the PID of the terminal device *i* or a hash value of the PID of the terminal device *i.*

In a possible design, the method further includes: sending a broadcast message, where the broadcast message includes the master public key and a system parameter, and the system parameter includes at least one of the following:

the additive group $G_1$, the order $q$ of the additive group $G_1$, the generator $P$ of the additive group $G_1$, a multiplicative group $G_2$, a bilinear mapping relationship e between the additive group $G_1$ and the multiplicative group $G_2$, the first hash function, the second hash function, or a third hash function. The first hash function and the third hash function are determined based on $Z_q^*$, where $Z_q^*$ represents an integer set with a value range of [1, $q$ - 1]. The second hash function is determined based on the additive group $G_1$.

According to a second aspect, a message sending method is provided. The method may be performed by a terminal device; or may be performed by a component of a terminal device, for example, a processor, a chip, or a chip system of the terminal device; or may be implemented by a logic module or software that can implement all or some of functions of a terminal device. The method includes: generating a third message, and sending the third message, where the third message includes a signature of original message text, and the signature of the original message text is determined based on a public key of a terminal device *i*.

According to this solution, the third message sent by the terminal device includes the signature of the original message text, and the signature of the original message text may be used by a message receiver to verify an identity of a sender of the third message, to improve security performance of communication.

In a possible design, that the signature of the original message text is determined based on the public key of the terminal device *i* includes: The signature of the original message text is determined based on the public key of the terminal device i and at least one of the following: a private key of the terminal device *i* or a first-part master public key of a trusted authority TA device, where a partial private key of the terminal device *i* is determined by the TA device.

In a possible design, the signature of the original message text is expressed as ($\eta_i$, $\sigma_i$), where $\eta_i$ and $\sigma_i$ meet the following relationships:

$$\eta_i = \gamma_i R_i;$$

and

$$\sigma_i = (\gamma_i \alpha_i + \beta_i) P_{pub1},$$

where

$R_i$ represents a second-part public key of the terminal device *i*, $\alpha_i$ and $\beta_i$ constitute the private key of the terminal device *i*, $P_{pub1}$ represents the first-part master public key of the TA device, and $\gamma_i$ is determined based on at least one of the following: a third hash function, the original message text, the PID of the terminal device *i*, a public key of the terminal device *i*, or a third timestamp, where the third timestamp is a timestamp carried in the third message.

In a possible design, $\gamma_i$ meets the following relationship:

$$\gamma_i = H_3(M_i || PID_i || PK_i || T_i),$$

where

$H_3$ represents the third hash function, $M_i$ represents the original message text, $PID_i$ represents the PID of the terminal device *i*, $PK_i$ represents the public key of the terminal device *i*, $T_i$ represents the third timestamp, and || is a character string connector.

In a possible design, before generating the third message, the method further includes: receiving a second parameter from the TA device, where the second parameter indicates the partial private key $PSK_i$ of the terminal device *i*; determining the private key $SK_i$ of the terminal device *i* based on the partial private key $PSK_i$ of the terminal device *i*; determining the public key $PK_i$ of the terminal device *i* based on the private key $SK_i$ of the terminal device *i* and a second-part master public key of the TA device; and broadcasting the public key $PK_i$ of the terminal device *i*.

According to this possible design, the TA device cannot learn of a complete private key of the terminal device, and therefore cannot forge a signature or decrypt ciphertext. This avoids a risk of privacy leakage caused by a private key escrow issue of IBC.

In a possible design, the partial private key of the terminal device *i* is as follows: $PSK_i = (\alpha_i, \kappa_i, \theta_i)$; and if $\alpha_i H_1(RID_i) = \theta_i + \kappa_i h_i$, the private key of the terminal device *i* is as follows: $SK_i = (\alpha_i, \beta_i)$, where $\beta_i \in Z_q^*$, and $Z_q^*$ represents an integer set with a value range of [1, $q$ - 1].

In a possible design, the public key of the terminal device *i* is as follows: $PK_i = (U_i, R_i)$, where $U_i$ and $R_i$ meet the following relationships:

$$U_i = \beta_i P_{pub2};$$

and

$$R_i = \alpha_i P_{pub2},$$

where

$P_{pub2}$ represents the second-part master public key of the TA device.

According to a third aspect, a message verification method is provided. The method may be performed by a message receiver; or may be performed by a component of a message receiver, for example, a processor, a chip, or a chip system of the message receiver; or may be implemented by a logic module or software that can implement all or some of functions of a message receiver. The message receiver may be a terminal device or an intermediate node. The method includes: receiving N messages from N terminal devices, where a message n of a terminal device n includes a signature of original message text n, n is a positive integer ranging from 1 to N, and N is a positive integer greater than 1; determining an aggregate signature based on signatures of original message text n in the N messages; and performing verification on the N messages based on the aggregate signature.

According to this solution, the message receiver performs verification based on the aggregate signature of the N messages. Compared with a manner of performing verification on each message separately, this can reduce verification complexity and improve verification efficiency.

In a possible design, the message n further includes a timestamp n, and determining the aggregate signature includes: when freshness of the message n meets a preset condition, determining the aggregate signature, where the freshness of the message n is determined based on the timestamp n of the message n.

According to this possible design, the message receiver verifies the freshness of the message before determining the aggregate signature, to determine whether the message has expired, and determines the aggregate signature when the message has not expired. This can avoid an increase, in processing complexity of the message receiver, caused by determining, by the message receiver, the aggregate signature based on an expired message.

In a possible design, determining the aggregate signature includes: when PID information of the terminal device n is stored by using a distributed ledger technology and a status of the PID information is valid, determining the aggregate signature.

According to this possible design, the message receiver verifies validity of a PID of the terminal device before determining the aggregate signature, to determine whether an identity of a message sender is valid, and determines the aggregate signature when the identity of the message sender is valid. This can avoid an increase, in processing complexity of the message receiver, caused by determining, by the message receiver, the aggregate signature based on a message sent by a terminal device with an invalid identity.

In a possible design, performing verification on the N messages based on the aggregate signature includes: determining a first bilinear mapping result and a second bilinear mapping result based on the aggregate signature, where when the first bilinear mapping result is the same as the second bilinear mapping result, the verification on the N messages succeeds.

According to this possible design, the message receiver may perform verification on the message by performing bilinear mapping calculation twice based on the aggregate signature. Compared with a conventional solution in which a quantity of bilinear mappings linearly increases with an increase in a quantity of messages in a certificateless signature, this improves verification efficiency, and reduces calculation overheads and a communication delay. In a vehicle-to-everything scenario, requirements of a vehicle-to-everything system for lightweight and real-time performance can be met.

In a possible design, the aggregate signature includes $\sum_{n=1}^{N} \sigma_n$ and $\sum_{n=1}^{N}(\eta_n + U_n)$, where $\sigma_n$ and $\eta_n$ constitute the signature of the original message text in the message n, and $U_n$ represents a first-part public key of the terminal device n.

In a possible design, the second bilinear mapping result is as follows:

$$e\left(\sum_{n=1}^{N} \sigma_n , P_{pub2}\right);$$

and

the first bilinear mapping result is as follows:

$$e(\sum_{n=1}^{N}(\eta_n + U_n), P_{pub1}),$$

where

e represents a bilinear mapping relationship, $P_{pub1}$ represents a first-part master public key of a TA device, and $P_{pub2}$ represents a second-part master public key of the TA device.

According to a fourth aspect, a communication apparatus is provided, to implement the foregoing methods. The communication apparatus may be the TA device in the first aspect, or an apparatus included in the TA device, for example, a chip or a chip system. Alternatively, the communication apparatus may be the terminal device in the second aspect, or an apparatus included in the terminal device, for example, a chip or a chip system. Alternatively, the communication apparatus may be the message receiver in the third aspect, or an apparatus included in the message receiver, for example, a chip or a chip system. The communication apparatus includes a corresponding module, unit, or means (means) for implementing the methods. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver, a transceiver device, or a communication interface.

According to a fifth aspect, a communication apparatus is provided, and includes a processor and a memory. The memory is configured to store computer instructions. When the processor executes the instructions, the communication apparatus is enabled to perform the method in any one of the foregoing aspects. The communication apparatus may be the TA device in the first aspect, or an apparatus included in the TA device, for example, a chip or a chip system. Alternatively, the communication apparatus may be the terminal device in the second aspect, or an apparatus included in the terminal device, for example, a chip or a chip system. Alternatively, the communication apparatus may be the message receiver in the third aspect, or an apparatus included in the message receiver, for example, a chip or a chip system.

According to a sixth aspect, a communication apparatus is provided, and includes a processor and a communication interface. The communication interface is configured to communicate with a module other than the communication apparatus. The processor is configured to execute a computer program or computer instructions, to enable the communication apparatus to perform the method in any one of the foregoing aspects. The communication apparatus may be the TA device in the first aspect, or an apparatus included in the TA device, for example, a chip or a chip system. Alternatively, the communication apparatus may be the terminal device in the second aspect, or an apparatus included in the terminal device, for example, a chip or a chip system. Alternatively, the communication apparatus may be the message receiver in the third aspect, or an apparatus included in the message receiver, for example, a chip or a chip system.

According to a seventh aspect, a communication apparatus is provided, and includes at least one processor. The processor is configured to execute a computer program or computer instructions stored in a memory, to enable the communication apparatus to perform the method in any one of the foregoing aspects. The memory may be coupled to the processor, or may be independent of the processor. The communication apparatus may be the TA device in the first aspect, or an apparatus included in the TA device, for example, a chip or a chip system. Alternatively, the communication apparatus may be the terminal device in the second aspect, or an apparatus included in the terminal device, for example, a chip or a chip system. Alternatively, the communication apparatus may be the message receiver in the third aspect, or an apparatus included in the message receiver, for example, a chip or a chip system.

According to an eighth aspect, a computer-readable storage medium is provided. The computer-readable storage medium stores a computer program or computer instructions. When the computer program or the computer instructions is/are run on a communication apparatus, the communication apparatus is enabled to perform the method in any one of the foregoing aspects.

According to a ninth aspect, a computer program product including instructions is provided. When the computer program product is run on a communication apparatus, the communication apparatus is enabled to perform the method in any one of the foregoing aspects.

According to a tenth aspect, a communication apparatus is provided (for example, the communication apparatus may be a chip or a chip system). The communication apparatus includes a processor, configured to implement the functions in any one of the foregoing aspects.

In some possible designs, the communication apparatus includes a memory, and the memory is configured to store necessary program instructions and data.

In some possible designs, when the apparatus is a chip system, the apparatus may include a chip, or may include a chip and another discrete component.

It can be understood that, when the communication apparatus provided in any one of the fourth to the tenth aspects is a chip, a sending action/function of the communication apparatus may be understood as information output, and a receiving action/function of the communication apparatus may be understood as information input.

For technical effects of any design manner in the fourth aspect to the tenth aspect, refer to technical effects of different design manners in the first aspect, the second aspect, or the third aspect. Details are not described herein again.

According to an eleventh aspect, a communication system is provided. The communication system includes a TA device and a terminal device. The TA device is configured to perform the solution in any one of the first aspect or the possible designs of the first aspect. The terminal device is configured to perform the solution in any one of the second aspect or the possible designs of the second aspect.

In some possible designs, the communication system further includes a message receiver. The message receiver is configured to perform the solution in any one of the third aspect or the possible designs of the third aspect.

## BRIEF DESCRIPTION OF DRAWINGS

FIG. 1 is a diagram of a structure of a block according to this application;
FIG. 2 is a diagram of a structure of a blockchain according to this application;
FIG. 3 is a diagram of a structure of a sparse Merkle tree SMT according to this application;
FIG. 4 is a diagram of a structure of a communication system according to this application;
FIG. 5 is a schematic flowchart of an identity management method according to this application;
FIG. 6a is a diagram of storing PID information by using a blockchain and an SMT according to this application;
FIG. 6b is another diagram of storing PID information by using a blockchain and an SMT according to this application;
FIG. 7 is a schematic flowchart of a communication method according to this application;
FIG. 8 is a schematic flowchart of another communication method according to this application;
FIG. 9 is a schematic flowchart of a message sending method according to this application;
FIG. 10 is a schematic flowchart of a message verification method according to this application;
FIG. 11 is a diagram of communication interfaces between a terminal device, an RSU, and a TA device according to this application;
FIG. 12 is a diagram of a structure of a communication apparatus according to this application;
FIG. 13 is a diagram of a structure of another communication apparatus according to this application; and
FIG. 14 is a diagram of a structure of still another communication apparatus according to this application.

## DESCRIPTION OF EMBODIMENTS

In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be in a singular form or a plural form.

In addition, to clearly describe the technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner for ease of understanding.

It can be understood that an "embodiment" mentioned throughout this specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments in any appropriate

manner. It can be understood that sequence numbers of processes do not mean execution sequences in embodiments of this application. The execution sequences of the processes should be determined based on functions and internal logic of the processes, and should not be construed as any limitation on implementation processes of embodiments of this application.

It can be understood that, in this application, both "when" and "if" mean that corresponding processing is performed in an objective case, but are not intended to limit time. In addition, the terms do not necessarily mean that a determining action is performed during implementation, and do not mean another limitation either.

It can be understood that, in some scenarios, some optional features in embodiments of this application may be independently implemented without relying on another feature, for example, a solution on which the optional features are currently based, to resolve a corresponding technical problem and achieve corresponding effects. Alternatively, in some scenarios, the optional features may be combined with another feature according to a requirement. Correspondingly, an apparatus provided in embodiments of this application may also correspondingly implement these features or functions. Details are not described herein.

In this application, for same or similar parts of embodiments, mutual reference may be made between the embodiments, unless otherwise specified. In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features. The following implementations of this application do not constitute a limitation on the protection scope of this application.

Currently, three types of internet of things authentication schemes are mainly included: a digital certificate authentication scheme based on a public key infrastructure (public key infrastructure, PKI) architecture, an identity-based cryptography (identity-based cryptography, IBC)-based authentication scheme, and a certificateless signature (certificateless signature, CLS) scheme.

In the digital certificate authentication scheme based on the PKI architecture:

A certificate authority (certificate authority, CA) generates and issues a digital certificate. For example, after receiving a digital certificate application request, the CA may use a public key and identity information of a certificate applicant, a validity period of a digital certificate, and other information as original message text, perform a hash operation on the original message text to obtain a hash digest of the original message text, encrypt the hash digest by using a private key of the CA to obtain a digital signature, and use the digital signature and the original message text as a digital certificate of the certificate applicant.

During subsequent entity communication, an identity verifier may decrypt a digital signature in a digital certificate of a device by using a public key of the CA to obtain a message digest, and perform a hash operation on original message text in the digital certificate to obtain a hash digest, and then may compare the message digest with the hash digest to verify authenticity and integrity of the digital certificate, to authenticate the device.

In the IBC-based authentication scheme:

Public recognizable and undeniable identity information (for example, a name, an email address, a home address, or a phone number) is used as a public key of an entity, and then identity authentication is implemented based on an IBC signature scheme. In addition, in the IBC-based authentication scheme, a key generation center (key generation center, KGC) generates a private key of the entity.

In the certificateless signature (certificateless signature, CLS) scheme:

A KGC generates a partial private key for an entity based on a real identity of the entity. The entity generates an actual private key by using a secrecy value and the partial private key, and stores the actual private key locally. That is, the KGC can learn of only the partial private key of the entity, but cannot learn of a complete private key of the entity.

All of the foregoing three authentication schemes have some problems. In the digital certificate authentication scheme based on the PKI architecture, the CA and a database server are vulnerable to network attacks as central entities, and a certificate generation operation fully relies on the CA, leading to a risk of user privacy leakage and false certificate generation. In addition, this scheme causes high certificate management (such as certificate status detection, certificate path construction, and certificate revocation) costs.

In the IBC-based authentication scheme, a public recognizable and undeniable identity is used as a public key, and authentication is implemented based on an IBC signature, so that high certificate management overheads caused by the PKI-based authentication scheme are reduced. However, this solution highly relies on reliability of the KGC. A malicious KGC may easily obtain private key information to launch an attack. For example, the KGC may decrypt any encrypted information of a user by using a private key of the user, leading to a serious risk of privacy leakage. That is, this scheme has a key escrow issue (Key Escrow Issue).

In the CLS scheme, the KGC cannot learn of a complete private key of a user, and therefore cannot forge a signature or decrypt ciphertext. This avoids a risk of privacy leakage caused by a private key escrow issue of the IBC. However, the CLS scheme still has the following problems:

1. In most of current CLS schemes, user identities are managed and maintained by using a central identity revocation list, that is, a centralized identity management scheme is used. However, the centralized identity management scheme has the following problems: high maintenance costs, lack of scalability, vulnerability to point-to-point attacks, and the like.
2. The current CLS schemes are implemented based on a bilinear mapping on an elliptic curve (Elliptic Curve), and calculation overheads increase linearly with an increase in a quantity of users. Therefore, an excessively large quantity of users causes huge calculation overheads and a long communication delay. This cannot meet requirements of a vehicle-to-everything application for lightweight and real-time performance.
3. The current CLS schemes focus on an identity authentication issue, and ignore privacy protection for user identities and an identification issue for malicious nodes.

Based on this, this application provides an identity management method, to obtain a real identity of a terminal device *i* while protecting privacy of the terminal device, to implement conditional privacy protection.

For ease of understanding technical solutions in embodiments of this application, related technologies in this application are first briefly described below.

1. Distributed ledger technology:

A distributed ledger is a database shared, replicated, and synchronized between network members. The distributed ledger records a transaction between network participants.

The network participants restrict and negotiate upon an update of a record in the ledger based on a consensus mechanism, without participation of an intermediate third-party arbitration agency.

For example, a typical implementation of the distributed ledger technology is a blockchain technology. Data is generated and stored in a unit of a block (block), and a chain (chain) data structure formed by sequentially linking blocks may be understood as a blockchain (Blockchain).

It can be understood that a block is also a data structure, and a device (or a node) storing a block may be referred to as a blockchain node, a maintenance node, or a consensus node. A blockchain network includes at least one blockchain node.

All blockchain nodes in the blockchain network jointly participate in data verification, storage, and maintenance. This may be understood as a consensus mechanism of the blockchain. Creation of a new block needs to be confirmed based on a consensus of all the blockchain nodes. After a block is added to respective blockchain replicas of all the blockchain nodes based on a consensus of the blockchain nodes, the block cannot be changed.

For example, as shown in FIG. 1, a block includes a block body and a block header. The block header stores a version number, a hash value of the block, necessary information (for example, a hash value of a previous block) for forming a chain structure with the previous block, a timestamp, and other information. The block body stores a transaction record. Transaction records may be classified into a transfer record, a smart contract record, a settlement record, a data record, and the like based on specific application scenarios.

For example, it is assumed that one blockchain includes three blocks, and a structure of the blockchain may be shown in FIG. 2. A hash value of a block 1 is denoted as A. Because the block 1 is the 1$^{st}$ block and does not point to a previous block, a hash value of a previous block that is stored in the block 1 is 0. A hash value of a block 2 is denoted as B. Because a previous block of the block 2 is the block 1, a hash value of a previous block that is stored in the block 2 is A. A hash value of a block 3 is denoted as C. Because a previous block of the block 3 is the block 2, a hash value of a previous block that is stored in the block 3 is B.

2. Sparse Merkle tree (sparse Merkle tree, SMT):

In the SMT, a leaf node is a hash (hash) value of a data block, and a non-leaf node is a hash value of a concatenated string of child nodes of the node. In addition, in the SMT, data blocks are ordered.

For example, there are four data blocks: A, B, C, and D. A possible structure of the SMT may be shown in FIG. 3. H() represents a hash function.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE and NR hybrid networking system, a device-to-device (device-to-device, D2D) system, a machine-to-machine (machine-to-machine, M2M) communication system, an internet of things (Internet of Things, IoT), or another next-generation communication system. Alternatively, the communication system may be a non-3GPP communication system. This is not limited.

The foregoing communication systems to which this application is applicable are merely examples for description, and communication systems to which this application is applicable are not limited thereto. This is uniformly described herein. Details are not described below again.

FIG. 4 shows an example communication system provided in this application. The communication system includes a trusted authority (trusted authority, TA) device and at least one terminal device. Optionally, the communication system may further include an intermediate node.

Optionally, the TA device may be implemented in a form of a server, a network element, or a functional entity. For example, the TA device is mainly used for identity management, and may participate in key generation.

Optionally, the terminal device may be a user-side device with a wireless transceiver function. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, including an indoor or outdoor scenario and a handheld or vehicle-mounted scenario, or may be deployed on water (for example, on a steamship), or may be deployed in the air (for example, on an airplane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, an on-board unit (on-board unit, OBU), a wearable device (which may also be referred to as a wearable intelligent device), a tablet computer or a computer with a wireless transceiver function, a virtual reality (virtual reality, VR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an uncrewed aerial vehicle with an uncrewed aerial vehicle-to-uncrewed aerial vehicle (UAV-to-UAV, U2U) communication capability, or the like.

Optionally, the intermediate node may collect information about the terminal device and report the information to the TA device, or may receive information from the TA device and deliver the information to the terminal device.

For example, in a V2X environment, the intermediate node may have the following functions: vehicle-road collaboration, intelligent computing, and perception fusion. For example, the intermediate node may be a roadside unit (roadside unit, RSU), and may obtain road information such as a traffic light, a traffic sign, and an obstacle on a road in real time, and send the road information to the terminal device (for example, a vehicle-mounted device).

Optionally, the intermediate node may communicate with the terminal device through a PC5 interface. In addition, the intermediate node may further communicate with the TA device through a wired connection or a wireless connection.

With reference to the accompanying drawings, the following describes the method provided in embodiments of this application. It can be understood that, in embodiments of this application, an execution entity may perform some or all of steps in embodiments of this application. The steps or operations are merely examples, and other operations or variations of various operations may alternatively be performed in embodiments of this application. In addition, the steps may be performed in an order different from an order shown in embodiments of this application, and not all of operations in embodiments of this application may be performed.

For example, solutions provided in the following embodiments of this application may be applied to a vehicle-to-everything scenario, and may be further applied to IoT trust management, data management, and other scenarios. In addition, the solutions may be further applied to another scenario with a large quantity of distributed communication nodes. An application scenario of the following embodiments is not specifically limited in this application, and the application scenarios described herein do not constitute any limitation on the following embodiments.

FIG. 5 shows an identity management method according to an embodiment of this application. The identity management method includes the following steps.

S501: A TA device determines a pseudonymous identity (pseudonymous identity, PID) of a terminal device *i*.

Optionally, the PID of the terminal device *i* is similar to anonymity, and may be understood as a non-real identity of the terminal device *i*, in other words, is not a real identity (real identity, RID) of the terminal device *i*.

Optionally, the terminal device *i* may request the PID of the terminal device *i* from the TA device, and the TA device may determine the PID for the terminal device *i* according to the request. For example, as shown in FIG. 5, before step S501, the method may further include the following step S500.

S500: The terminal device *i* sends a first message to the TA device. Correspondingly, the TA device receives the first message from the terminal device *i*. The first message is used to request the PID of the terminal device *i*.

Optionally, the first message may include first encrypted information $E_1$. Further, the first message may include a first timestamp $T_0$. For example, the first timestamp may be understood as time at which the first message is generated. The first timestamp may be used to authenticate generation time of the first message, prevent a replay attack, or check freshness of the first message.

Optionally, the terminal device *i* may encrypt the RID (denoted as $RID_i$) of the terminal device *i* by using a master public key $P_{pub}$ of the TA device to obtain the first encrypted information $E_1$, or may encrypt the RID of the terminal device *i* and the first timestamp $T_0$ by using a master public key $P_{pub}$ of the TA device to obtain the first encrypted information $E_1$. The master public key $P_{pub}$ of the TA device is described in a subsequent embodiment. Details are not described herein.

Optionally, after receiving the first message, the TA device may decrypt the first encrypted information in the first message by using a master private key s of the TA device to obtain the RID of the terminal device *i,* and then determine the PID of the terminal device *i* for the terminal device *i.*

The PID of the terminal device *i* is associated with the RID of the terminal device *i,* or the PID of the terminal device *i* is determined based on the RID of the terminal device *i.*

Further, the PID of the terminal device *i* may be determined based on the RID of the terminal device *i* and at least one of the following: the master private key *s* of the TA device, a first hash function $H_1$, or the first timestamp $T_0$. The master private key *s* of the TA device and the first hash function $H_1$ are described in a subsequent embodiment. Details are not described herein.

For example, the PID of the terminal device *i* meets a relationship shown in the following formula (1):

$$PID_i = RID_i \oplus H_1(s||T_0) \qquad (1),$$

where

$PID_i$ represents the PID of the terminal device *i,* $RID_i$ represents the RID of the terminal device *i,* ⊕ represents an exclusive OR operation, and || is a character string connector.

S502: The TA device sends a first parameter to the terminal device *i.* Correspondingly, the terminal device *i* receives the first parameter from the TA device.

The first parameter indicates the PID of the terminal device *i.* For example, after determining the PID of the terminal device *i,* the TA device may perform some operations on the PID of the terminal device *i,* for example, perform an exclusive OR operation on the PID of the terminal device *i,* to obtain the first parameter.

Optionally, the first parameter may be determined based on the PID of the terminal device *i* and the RID of the terminal device *i.* For example, $Y_i = PID_i \oplus RID_i$, where $Y_i$ represents the first parameter.

Alternatively, the first parameter may be determined based on the PID of the terminal device *i,* the RID of the terminal device *i,* and the first timestamp. For example, $Y_i = PID_i \oplus (RID_i \| T_0)$.

S503: The terminal device *i* determines the PID of the terminal device *i* based on the first parameter.

Optionally, after receiving the first parameter, the terminal device *i* may determine the PID of the terminal device *i* based on the first parameter.

For example, when the first parameter is determined based on the PID of the terminal device *i* and the RID of the terminal device *i,* the terminal device *i* may determine that $PID_i = Y_i \oplus RID_i$; or when the first parameter is determined based on the PID of the terminal device *i,* the RID of the terminal device *i,* and the first timestamp, the terminal device *i* may determine that $PID_i = Y_i \oplus (RID_i \| T_0)$.

According to this solution, in one aspect, the TA device may determine the PID of the terminal device *i* for the terminal device *i,* to protect the RID of the terminal device *i,* in other words, protect privacy of the terminal device *i.* In another aspect, the PID of the terminal device *i* is associated with the RID of the terminal device *i,* so that the TA device can determine the RID of the terminal device *i* based on the PID of the terminal device *i,* and can determine the real identity of the terminal device *i* when the terminal device *i* performs a malicious operation or an unauthorized operation. That is, the real identity of the terminal device *i* can be obtained while privacy of the terminal device *i* is protected. In other words, conditional privacy protection is implemented.

In still another aspect, when the master private key of the TA device participates in determining the PID of the terminal device i, because the master private key of the TA device is locally stored on the TA, it is quite difficult for another node to obtain the master private key of the TA device, and therefore it is also quite difficult to obtain the RID of the terminal device *i* based on the PID of the terminal device *i.* This further improves a capability of protecting privacy of the terminal device *i.*

In yet another aspect, the TA device sends the first parameter to the terminal device *i* to indicate the PID of the terminal device i, so that security and privacy of the PID of the terminal device *i* during transmission in a network are protected. This effectively prevents a malicious node from intercepting the PID of the terminal device *i* to perform an unauthorized operation by masquerading as the terminal device *i.*

In yet another aspect, when the PID of the terminal device *i* meets the foregoing formula (1), an exclusive OR

operation may be performed on the RID and a hash value of the master private key of the TA device and the timestamp, to obtain the PID of the terminal device *i.* That is, the pseudonymous identity is generated in a simple and efficient manner, and complexity of calculation of the TA device is reduced.

Optionally, the TA device may check identity validity of the terminal device *i* before step S501, and perform step S501 when the check succeeds.

For example, the TA device may maintain a real identity list, for example, a real vehicle list (real vehicle list, RVL). The real identity list may store an RID of at least one terminal device. If the real identity list includes the RID of the terminal device *i,* the check succeeds.

Further, the TA device may check whether PID information of the terminal device *i* has been stored by using a distributed ledger technology. If no PID information of the terminal device *i* is stored by using the distributed ledger technology, the check succeeds.

To be specific, the PID of the terminal device *i* is determined when the real identity list includes the RID of the terminal device *i,* or the PID of the terminal device *i* is determined when the real identity list includes the RID of the terminal device *i* and no PID information of the terminal device *i* is stored by using the distributed ledger technology.

According to this solution, checking is performed based on the real identity list, to prevent the TA device from determining a PID for an unauthorized terminal device (for example, the real identity list does not include an RID of the terminal device). In addition, whether the PID information of the terminal device *i* is stored by using the distributed ledger technology is checked, to avoid an unnecessary waste of computing resources caused by repeatedly determining the PID of the terminal device *i* by the TA device.

Optionally, as shown in FIG. 5, after determining the PID of the terminal device *i,* the TA device may further store the PID information of the terminal device *i* by using the distributed ledger technology. For example, the PID information of the terminal device *i* may be the PID of the terminal device *i* or a hash value of the PID of the terminal device *i.*

For example, the TA device may store an SMT by using the distributed ledger technology, and store the PID information of the terminal device *i* on a leaf node with an index of ($2i$ - 1) in the SMT.

For example, the distributed ledger technology is implemented by using a blockchain. The TA device may store the PID information of the terminal device *i* in a blockchain network. For example, as shown in FIG. 6a, the TA device may store the SMT in the blockchain network, preset a leaf node of the SMT as $H(null)$, and update the leaf node with an index of ($2i$ - 1) in the SMT to the PID information of the terminal device *i* (for example, $H(PID_i)$) after determining the PID of the terminal device *i.*

Optionally, the TA device may further store a status of the PID information of the terminal device *i* by using the distributed ledger technology. The status includes revoked or valid. The status of the PID information of the terminal device *i* being revoked indicates that the PID of the terminal device *i* is invalid or unavailable or has been revoked. The status of the PID information of the terminal device *i* being valid indicates that the PID of the terminal device *i* is available.

For example, the TA device may store an SMT by using the distributed ledger technology, and store the status of the PID information of the terminal device *i* on a leaf node with an index of ($2i$) in the SMT.

For example, the distributed ledger technology is implemented by using a blockchain. The TA device may store the status of the PID information of the terminal device *i* in a blockchain network. For example, as shown in FIG. 6a, the TA device may store the SMT in the blockchain network, preset a leaf node of the SMT as $H(null)$, and store the status of the PID information of the terminal device *i* on the leaf node with an index of ($2i$) in the SMT.

For example, if the status of the PID information of terminal device *i* is revoked, the leaf node with an index of ($2i$) in the SMT may be updated to $H$("first value"). If the status of the PID information of the terminal device i is valid, the leaf node with an index of ($2i$) in the SMT may be retained as $H(null)$, or the leaf node with an index of ($2i$) in the SMT may be updated to $H$("second value"). The first value is different from the second value. For example, the first value may be 1. To be specific, the leaf node with an index of ($2i$) in the SMT being $H$("1") indicates that the status of the PID information of the terminal device *i* is revoked.

Optionally, because the PID information of the terminal device *i* and the status of the PID information are stored in a distributed ledger, a device in a system may access the distributed ledger in real time to verify validity of a pseudonymous identity of a terminal device.

For example, the distributed ledger is implemented by using a blockchain. For verification on validity of the pseudonymous identity of the terminal device *i,* a verifier may query, from a blockchain network, whether a leaf node with an index of ($2i$ - 1) in an SMT of a latest block is $H(PID_i)$, and whether a leaf node with an index of ($2i$) is $H(null)$ or $H$("second value"). The leaf node with an index of ($2i$ - 1) in the SMT being $H(PID_i)$ and the leaf node with an index of ($2i$) being $H(null)$ or $H$("second value") indicates that the pseudonymous identity of the terminal device *i* is valid. The leaf node with an index of ($2i$ - 1) in the SMT being $H(PID_i)$ but the leaf node with an index of ($2i$) being $H$("first value") indicates that the pseudonymous identity of the terminal device *i* is invalid.

Optionally, when the terminal device *i* performs an unauthorized operation, the TA device may set the status of the PID information of the terminal device *i* to revoked, in other words, revoke the PID of the terminal device *i.*

For example, based on the example shown in FIG. 6a, as shown in FIG. 6b, the TA device may update the leaf

node with an index of (2*i*) in the SMT to *H*("first value"). This indicates that the pseudonymous identity of the terminal device *i* is revoked, in other words, the pseudonymous identity of the terminal device *i* is invalid. It can be understood that, in FIG. 6b, an example in which the first value is 1 is used for description.

Optionally, when the terminal device *i* performs an unauthorized operation, the TA device may determine the RID of the terminal device *i* based on the PID of the terminal device *i.* That is, the TA device may determine a real identity of a terminal device that performs an unauthorized operation. For example, for a relationship between the PID of the terminal device *i* and the RID of the terminal device *i,* refer to related descriptions in step S501. Details are not described herein again.

According to this solution, because a real identity of a terminal device that performs an unauthorized operation can be determined, a related limitation or punishment or the like may be performed on the terminal device, to improve security performance.

Optionally, after determining a real identity of a terminal device that performs an unauthorized operation, to be specific, after determining the RID of the terminal device *i* based on the PID of the terminal device *i,* the TA device may add remarks about or record the unauthorized operation of the terminal device *i* in the real identity list.

According to this solution, the TA device adds remarks about the unauthorized operation of the terminal device *i.* This facilitates subsequent management of the terminal device *i* and the like. For example, authorization related to the unauthorized operation of the terminal device *i* may be revoked, to further improve security performance.

Optionally, the unauthorized operation performed by the terminal device *i* may be reported to the TA device by an affected party of the unauthorized operation, or may be reported to the TA device by an intermediate node after the intermediate node detects the unauthorized operation performed by the terminal device *i.* For example, the affected party or the intermediate node may report the PID of the terminal device *i* and the unauthorized operation to the TA device. To be specific, the TA device may learn, based on the reporting by the affected part or the intermediate node, that the terminal device *i* has performed the unauthorized operation.

According to the foregoing solution, in one aspect, the PID information of the terminal device is stored by using the distributed ledger technology and an SMT data structure. Therefore, a secure, transparent, decentralized, scalable, and anti-single-point-attack identity management mechanism can be implemented based on characteristics of the distributed ledger and the SMT data structure, to avoid certificate management overheads caused by a PKI system and a key escrow issue caused by an IBE solution.

In another aspect, the status of the PID information of the terminal device is stored by using the distributed ledger technology and the SMT data structure, so that the PID information of the terminal device can be revoked, in other words, the pseudonymous identity can be revoked. In this way, when a specific terminal device performs an unauthorized operation or a malicious attack, a pseudonymous identity of the terminal device can be revoked, so that supervision efficiency for unauthorized behavior in a system is improved.

In still another aspect, validity and effectiveness of the pseudonymous identity of the terminal device may be queried and verified by using an open distributed ledger, to implement validity verification on the pseudonymous identity of the terminal device.

The identity management method provided in this application is described in the foregoing embodiments. The following provides a communication method, to describe a key and a system parameter of a TA device. As shown in FIG. 7, the communication method includes the following steps.

S701: A TA device determines a master public key of the TA device, a master private key of the TA device, or a system parameter.

Optionally, the master private key s of the TA device meets the following formula: $s \in Z_q^*$ , where $Z_q^*$ represents an integer set with a value range of [1, *q* - 1], *q* is an order of an additive group $G_1$, and *q* is a prime. That is, $G_1$ is an additive group whose order is the prime *q*.

Optionally, the master public key $P_{pub}$ of the TA device includes a first-part master public key $P_{pub1}$ and a second-part master public key $P_{pub2}$. The master public key may be determined based on the master private key of the TA device and a generator of the additive group $G_1$. For example, the master public key $P_{pub}$ of the TA device may meet the following relationship:

$$P_{pub} = \left(P_{pub1}, P_{pub2}\right) = (sP, s^{-1}P).$$

To be specific, $P_{pub1} = sP$, and $P_{pub2} = s^{-1}P$, where P represents the generator of the additive group $G_1$, and $s^{-1}$ represents a reciprocal of the master private key *s*.

Optionally, the system parameter includes at least one of the following: the additive group $G_1$, the order *q* of the additive group $G_1$, the generator P of the additive group $G_1$, a multiplicative group $G_2$, a bilinear mapping relationship e between the additive group $G_1$ and the multiplicative group $G_2$, a first hash function $H_1$, a second hash function $H_2$, or a third

hash function $H_3$. For example, the bilinear mapping relationship e between the additive group $G_1$ and the multiplicative group $G_2$ may be as follows: $e: G_1 \times G_1 \to G_2$. An order of the multiplicative group $G_2$ is also $q$.

Optionally, the first hash function and the third hash function are determined based on $Z_q^*$. For example, the first hash function and the third hash function may be respectively defined as follows: $H_1: \{0,1\}^* \to Z_q^*$, and $H_3: \{0,1\}^* \to Z_q^*$, where {0,1}* indicates a non-zero binary sequence, and $H_1: \{0,1\}^* \to Z_q^*$ indicates that the first hash function may be mapped to $Z_q^*$ in a form of a non-zero binary sequence.

Optionally, the second hash function is determined based on the additive group $G_1$. For example, the second hash function may be defined as follows: $H_2: \{0,1\}^* \to G_1$, indicating that the second hash function may be mapped to $G_1$ in a form of a non-zero binary sequence.

S702: The TA device sends a broadcast message.

The broadcast message includes the master public key of the TA device and the system parameter. The master private key of the TA device is stored by the TA device locally in a secret mode.

Optionally, the master private key of the TA device, the master public key of the TA device, or some system parameters in the method shown in FIG. 5 may be determined according to the method shown in FIG. 7. In addition, the method shown in FIG. 7 may be independently performed without relying on the method shown in FIG. 5, or may be performed in combination with the method shown in FIG. 5. This is not specifically limited in this application.

In addition to determining the master public key and the master private key of the TA device, the TA device may further generate a partial private key of a terminal device. The following describes a private key generation method. As shown in FIG. 8, the private key generation method includes the following steps.

S801: A TA device determines a partial private key $PSK_i$ of a terminal device *i.*

Optionally, the partial private key $PSK_i$ of the terminal device *i* is determined based on at least one of the following: a master private key s of the TA device, a first hash function $H_1$, an RID of the terminal device *i,* a master public key $P_{pub}$ of the TA device, a second hash function $H_2$, or a first nonce $\lambda_i$, where $\lambda_i \in Z_q^*$. For example, the parameters may be implemented based on the descriptions in the method shown in FIG. 7, or the parameters may be implemented in another manner. This is not specifically limited in this application.

For example, the partial private key of the terminal device *i* is as follows: $PSK_i = (\alpha_i, \kappa_i, \theta_i)$, where $\alpha_i$, $\kappa_i$, and $\theta_i$ may meet the following relationships:

$$\alpha_i = s^{-1} + \lambda_i h_i, \text{ and } h_i = H_2(RID_i || P_{pub});$$

$$\kappa_i = \lambda_i H_1(RID_i);$$

and

$$\theta_i = s^{-1} H_1(RID_i),$$

where

$RID_i$ represents the RID of the terminal device *i,* and || is a character string connector.

Optionally, the terminal device *i* may request the partial private key $PSK_i$ of the terminal device *i* from the TA device, and the TA device may determine the partial private key for the terminal device *i* according to the request. For example, as shown in FIG. 8, before step S801, the method may further include the following step S800.

S800: The terminal device *i* sends a second message to the TA device. Correspondingly, the TA device receives the second message from the terminal device *i.* The second message is used to request the partial private key $PSK_i$ of the terminal device *i.*

Optionally, the second message includes second encrypted information $E_2$. Further, the second message may further include a second timestamp $T_0'$. For example, the second timestamp may be understood as time at which the second message is generated. The second timestamp may be used to authenticate generation time of the second message, prevent a replay attack, or check freshness of the second message.

Optionally, the terminal device *i* may encrypt an index *i* of the terminal device *i* by using the master public key $P_{pub}$ of the TA device to obtain the second encrypted information $E_2$, or may encrypt an index *i* of the terminal device *i* and the second timestamp $T_0'$ by using the master public key $P_{pub}$ of the TA device to obtain the second encrypted information $E_2$.

Optionally, after receiving the second message, the TA device may decrypt the second encrypted information in the second message by using the master private key *s* of the TA device to obtain the index *i* of the terminal device *i,* and then determine the partial private key of the terminal device *i.*

Optionally, before determining the partial private key of the terminal device *i,* the TA device may verify authenticity of the RID of the terminal device *i.* For example, after decrypting the second encrypted information to obtain the index *i,* the TA device may check whether a real identity list includes the index *i.* The real identity list including the index *i* indicates that the RID of the terminal device *i* is real or valid. In this case, the TA device may determine the partial private key of the terminal device *i.*

S802: The TA device sends a second parameter to the terminal device *i.* Correspondingly, the terminal device *i* receives the second parameter from the TA device.

The second parameter indicates the partial private key $PSK_i$ of the terminal device *i.* For example, after determining the partial private key of the terminal device *i,* the TA device may perform some operations on the partial private key of the terminal device *i* to obtain the second parameter.

Optionally, the second parameter may be determined based on the RID of the terminal device *i* and the partial private key of the terminal device *i.* Alternatively, the second parameter may be determined based on the RID of the terminal device i, the partial private key of the terminal device *i,* and the second timestamp.

For example, the second parameter may include $(A_i, K_i, \Theta_i)$, where $A_i$, $K_i$, and $\Theta_i$ may meet the following relationships:

$$A_i = \alpha_i \oplus (RID_i || T_0');$$

$$K_i = \kappa_i \oplus (RID_i || T_0');$$

and

$$\Theta_i = \theta_i \oplus (RID_i || T_0').$$

According to this solution, the TA device sends the second parameter to the terminal device *i* to indicate the partial private key of the terminal device *i,* so that security and privacy of the partial private key of the terminal device *i* during transmission in a network are protected. This effectively prevents a malicious node from intercepting the partial private key of the terminal device *i* to perform an unauthorized operation by masquerading as the terminal device *i.*

S803: The terminal device *i* determines the partial private key of the terminal device *i* based on the second parameter.

Optionally, after receiving the second parameter, the terminal device *i* may determine the partial private key $PSK_i = (\alpha_i, \kappa_i, \theta_i)$ of the terminal device *i* based on the second parameter.

S804: The terminal device *i* determines a private key $SK_i$ of the terminal device *i* based on the partial private key $PSK_i$ of the terminal device *i.*

Optionally, the private key $SK_i$ of the terminal device *i* may include a first-part private key and a second-part private key. The first-part private key may be determined based on the partial private key $PSK_i$ of the terminal device *i.* The second-part private key may be a nonce.

For example, if $\alpha_i H_1(RID_i) = \theta_i + \kappa_i h_i$, the first-part private key of the terminal device *i* may be $\alpha_i$. The second-part private key may be denoted as $\beta_i$, where $\beta_i \in Z_q^*$, and $Z_q^*$ represents an integer set with a value range of [1, *q* - 1]. That is, if $\alpha_i H_1(RID_i) = \theta_i + \kappa_i h_i$, the private key of the terminal device *i* is as follows: $SK_i = (\alpha_i, \beta_i)$.

According to this solution, after receiving the partial private key $PSK_i$, the terminal device *i* may perform verification based on the equation $\alpha_i H_1(RID_i) = \theta_i + \kappa_i h_i$, and determine the private key of the terminal *i* when the equation is true, to improve correctness of the partial private key and the private key.

S805: The terminal device *i* determines a public key $PK_i$ of the terminal device *i* based on the private key $SK_i$ of the terminal device *i* and a second-part master public key of the TA device.

Optionally, the public key $PK_i$ of the terminal device *i* includes a first-part public key $U_i$ and a second-part public key $R_i$. The first-part public key $U_i$ may be determined based on the second-part private key $\beta_i$ of the terminal device *i* and the second-part master public key of the TA device. The second-part public key $R_i$ may be determined based on the first-part private key $\alpha_i$ of the terminal device *i* and the second-part master public key of the TA device.

For example, the first-part public key $U_i$ and the second-part public key $R_i$ may respectively meet the following relationships:

$$U_i = \beta_i P_{pub2};$$

and

$$R_i = \alpha_i P_{pub2}.$$

S806: The terminal device *i* broadcasts the public key $PK_i$ of the terminal device *i.*

Optionally, after the terminal device *i* broadcasts the public key of the terminal device *i,* another terminal device or an intermediate node may receive the public key of the terminal device *i.* When a message is subsequently sent to the terminal device *i,* the message may be encrypted by using the public key of the terminal device *i.*

According to this solution, the TA device cannot learn of a complete private key of the terminal device, and therefore cannot forge a signature or decrypt ciphertext. This avoids a risk of privacy leakage caused by a private key escrow issue of IBC.

In addition, this application further provides a message sending method. As shown in FIG. 9, the message sending method may include the following steps.

S901: A terminal device *i* generates a third message. The third message includes a signature of original message text.

Optionally, in addition to the signature of the original message text, the third message further includes the original message text and at least one of the following: a PID of the terminal device *i* or a third timestamp $T_i$. The third timestamp may be understood as time at which the third message is generated. The third timestamp may be used to authenticate generation time of the third message, prevent a replay attack, or check freshness of the third message.

The signature of the original message text is determined based on a public key of the terminal device *i.* For example, the public key of the terminal device *i* may be implemented in the manner in the embodiment shown in FIG. 8, or may be implemented in another manner. This is not specifically limited in this application.

Further, the signature of the original message text may be determined based on the public key of the terminal device *i* and at least one of the following: a private key of the terminal device i or a first-part master public key of a TA device. A partial private key of the terminal device *i* is determined by the TA device. For example, the private key of the terminal device *i* and the first-part master public key of the TA device may be implemented in the manners in the foregoing embodiments, or may be implemented in another manner. This is not specifically limited in this application.

Optionally, the signature of the original message text may include a first-part signature $\eta_i$ and a second-part signature $\sigma_i$. The first-part signature $\eta_i$ may be determined based on the public key of the terminal device *i,* and the second-part signature $\sigma_i$ may be determined based on the private key of the terminal device i and the first-part master public key of the TA device.

For example, the signature of the original message text may be expressed as ($\eta_i$, $\sigma_i$), where$\eta_i$ and $\sigma_i$ may respectively meet the following relationships:

$$\eta_i = \gamma_i R_i;$$

and

$$\sigma_i = (\gamma_i \alpha_i + \beta_i) P_{pub1},$$

where

$R_i$ represents a second-part public key of the terminal device *i,* $\alpha_i$ and $\beta_i$ constitute the private key of the terminal device *i,* and $P_{pub1}$ represents the first-part master public key of the TA device.

Optionally, $\gamma_i$ is determined based on at least one of the following: a third hash function, the original message text in the third message, the PID of the terminal device i, the public key of the terminal device *i,* or the third timestamp. For example, $\gamma_i$ may meet the following relationship:

$$\gamma_i = H_3(M_i || PID_i || PK_i || T_i),$$

where

$H_3$ represents the third hash function, $M_i$ represents the original message text, $PID_i$ represents the PID of the terminal device *i,* $PK_i$ represents the public key of the terminal device *i,* $T_i$ represents the third timestamp, and || is a character string connector. For example, the third hash function may be implemented in the manner in the embodiment shown in FIG. 7, or may be implemented in another manner. This is not specifically limited in this application.

S902: The terminal device *i* sends the third message.

Optionally, the terminal device *i* may send the third message to an intermediate node, or may send the third message to another terminal device. This is not specifically limited in this application.

In FIG. 9, message sending is described from a perspective of a message sender. The following describes message receiving (in other words, verification) from a perspective of a message receiver. As shown in FIG. 10, a message verification method provided in this application may include the following steps.

S1001: A message receiver receives N messages from N terminal devices. To be specific, the message receiver receives a message n from a terminal device n, where n is a positive integer ranging from 1 to N.

For example, the message receiver may be an intermediate node, for example, an RSU; or the message receiver may be a terminal device (a terminal device other than the N terminal devices).

Optionally, the N messages may be received by the message receiver within a period of time (or referred to as a time interval T). Duration of the period of time or duration of the time interval T may be determined by the message receiver, or may be predefined. This is not specifically limited in this application.

The message n of the terminal device n includes a signature of original message text n. The signature of the original message text n is determined based on a public key of the terminal device n. Refer to related descriptions of the original message text in step S901. Details are not described herein again.

Optionally, in addition to the signature of the original message text n, the message n further includes the original message text n and at least one of the following: a PID of the terminal device n or a timestamp n. Refer to related descriptions about the third message in step S901. Details are not described herein again.

For example, the message n includes the original message text n (denoted as $M_n$), the PID (denoted as $PID_n$) of the terminal device n, the signature (denoted as $\eta_n$, $\sigma_n$) of the original message text n, and the timestamp n (denoted as $T_n$). The message n may be expressed as $\{M_n, PID_n, \eta_n, \sigma_n, T_n\}$. To be specific, the N messages received by the message receiver may be expressed as follows: $\{M_1, PID_1, \eta_1, \sigma_1, T_1\}$, $\{M_2, PID_2, \eta_2, \sigma_2, T_2\}$, ..., and $\{M_n, PID_n, \eta_n, \sigma_n, T_n\}$ .

S1002: The message receiver determines an aggregate signature based on signatures of original message text n in the N messages, in other words, determines the aggregate signature based on signatures of N pieces of original message text.

Optionally, the aggregate signature includes a first-part aggregate signature and a second-part aggregate signature. The first-part aggregate signature may be obtained by aggregating first-part signatures of the N pieces of original message text and a first-part public key of the terminal device n. The second-part aggregate signature may be obtained by aggregating second-part signatures of the N pieces of original message text.

For example, the first-part aggregate signature may be expressed as $\sum_{n=1}^{N}(\eta_n + U_n)$ , and the second-part aggregate signature may be expressed as $\sum_{n=1}^{N}\sigma_n$. That is, the aggregate signature may include $\sum_{n=1}^{N}(\eta_n + U_n)$ and $\sum_{n=1}^{N}\sigma_n$ , where $\sigma_n$ and $\eta_n$ constitute the signature of the original message text n, and $U_n$ represents the first-part public key of the terminal device n.

Optionally, the message receiver may check freshness of the message n before step S1002, and determine the aggregate signature when the freshness of the message n meets a preset condition.

For example, the freshness of the message n is determined based on the timestamp n of the message n. For example, the freshness of the message n may be a time difference between a timestamp *n'* at which the message receiver receives the message n and the timestamp n, and the preset condition may be that the time difference between the timestamp *n'* and the timestamp n is less than or equal to a threshold.

Optionally, when freshness of a message among the N messages does not meet the preset condition, the message receiver may discard the message, and determine the aggregate signature based on signatures of original message text in remaining N-1 messages. In this embodiment, an example in which freshness of all of the N messages meets the preset condition is used for description.

According to this solution, the message receiver verifies the freshness of the message before determining the aggregate signature, to determine whether the message has expired, and determines the aggregate signature when the message has not expired. This can avoid an increase, in processing complexity of the message receiver, caused by determining, by the message receiver, the aggregate signature based on an expired message.

Optionally, the message receiver may verify validity or effectiveness of the PID of the terminal device n before step S1002, and determine the aggregate signature when the PID of the terminal device n is valid or effective.

For example, when PID information of the terminal device n is stored by using a distributed ledger technology and a status of the PID information is valid, it can be considered that the PID of the terminal device n is valid or effective, and therefore the aggregate signature may be determined.

For example, a distributed ledger is implemented by using a blockchain. A TA device may query, from a blockchain network, whether a leaf node with an index of (2*n* - 1) in an SMT of a latest block is $H(PID_i)$, and whether

a leaf node with an index of (2*n*) is *H(null)* or *H*("second value"). The leaf node with an index of (2*n* - 1) in the SMT being *H* ($PID_i$) and the leaf node with an index of (2*n*) being *H*(*null*) or *H*("second value") indicates that the PID of the terminal device n is valid or effective.

Optionally, when a PID of a terminal device among the N terminal devices is invalid or revoked, the message receiver may discard a message sent by the terminal device, and determine the aggregate signature based on signatures of original message text in remaining N-1 messages. In this embodiment, an example in which PIDs of all of the N terminal devices are valid is used for description.

According to this solution, the message receiver verifies validity of the PID of the terminal device before determining the aggregate signature, to determine whether an identity of a message sender is valid, and determines the aggregate signature when the identity of the message sender is valid. This can avoid an increase, in processing complexity of the message receiver, caused by determining, by the message receiver, the aggregate signature based on a message sent by a terminal device with an invalid identity.

S1003: The message receiver performs verification on the N messages based on the aggregate signature.

Optionally, the message receiver may determine a first bilinear mapping result and a second bilinear mapping result based on the aggregate signature, and perform verification on the N messages based on the first bilinear mapping result and the second bilinear mapping result.

For example, when the first bilinear mapping result is the same as the second bilinear mapping result, the verification on the N messages succeeds. The message receiver may perform subsequent processing based on the N messages.

When the first bilinear mapping result is different from the second bilinear mapping result, the verification on the N messages fails. The message receiver may discard the N messages, and continue to receive a message in a next time period.

Optionally, the first bilinear mapping result may be determined based on a first aggregate signature and a first-part master public key $P_{pub1}$ of the TA device. For example, the first bilinear mapping result may be as follows:

$$\boldsymbol{e}\left(\sum_{n=1}^{N}(\eta_n + U_n)\,, P_{pub1}\right).$$

Optionally, the second bilinear mapping result may be determined based on a second aggregate signature and a second-part master public key $P_{pub2}$ of the TA device. For example, the second bilinear mapping result may be as follows:

$$\boldsymbol{e}\left(\sum_{n=1}^{N}\sigma_n\,, P_{pub2}\right).$$

That is, when $e\left(\sum_{n=1}^{N}(\eta_n + U_n)\,, P_{pub1}\right) = e\left(\sum_{n=1}^{N}\sigma_n\,, P_{pub2}\right)$, the verification on the N messages succeeds.

*e* represents a bilinear mapping relationship. For the bilinear mapping relationship, refer to related descriptions in step S701. Details are not described herein again.

According to this solution, the message receiver may perform verification on the message by performing bilinear mapping calculation twice based on the aggregate signature. Compared with a conventional solution in which a quantity of bilinear mappings linearly increases with an increase in a quantity of messages in a certificateless signature, this improves verification efficiency, and reduces calculation overheads and a communication delay. In a vehicle-to-everything scenario, requirements of a vehicle-to-everything system for lightweight and real-time performance can be met.

It should be noted that, in the methods shown in FIG. 5 to FIG. 10, the methods may be performed separately, in other words, the methods may not rely on each other; or a plurality of methods may be performed in combination. This is not specifically limited in this application.

For example, the methods provided in the foregoing embodiments of this application are applied to a vehicle-to-everything system, and an intermediate node is an RSU. FIG. 11 is a diagram of communication interfaces between a terminal device, an RSU, and a TA device. Communication between the terminal device, the RSU, and the TA device may be implemented through the interfaces shown in FIG. 11.

As shown in (a) in FIG. 11, the TA device and an application server (Application Server) may be arranged side by

side, in other words, the TA device and the application server may be at a same network location, and the RSU serves as a UE (namely, a UE-type). In this case, the terminal device may communicate with the TA device through a V1 interface, the TA device or the application server communicates with a V2X application on the RSU side through a V1 interface, and the V2X application on the RSU side communicates with a V2X application on the terminal device side through a V5 interface. The V1 interface and the V5 interface may be understood as logical interfaces.

In addition, the terminal device may communicate with the RSU through a PC5 interface, and the RSU may communicate with a base station (for example, a next-generation NodeB (next-generation NodeB, gNB)) through a Uu interface. A user plane function (user plane function, UPF) network element may receive data from the application server and send the data to the base station, or may receive data from the base station and send the data to the application server.

As shown in (b) in FIG. 11, the TA device may serve as a new functional entity, and the RSU serves as a base station (namely, a gNB-type). In this case, the TA device may communicate with the terminal device through a *V*1' interface. The *V*1' interface may be understood as a new logical interface in this embodiment of this application.

In addition, a V2X application on the terminal device side may communicate with the V2X application server through a V1 interface, and the terminal device may communicate with the base station or the RSU through a Uu interface.

It can be understood that, in the foregoing embodiments, the methods and/or the steps implemented by the TA device may alternatively be implemented by a component (for example, a processor, a chip, a chip system, a circuit, a logic module, or software such as a chip or a circuit) that may be used in the TA device; the methods and/or the steps implemented by the terminal device may alternatively be implemented by a component (for example, a processor, a chip system, a circuit, a logic module, or software such as a chip or a circuit) that may be used in the terminal device; and the methods and/or the steps implemented by the message receiver may alternatively be implemented by a component (for example, a processor, a chip, a chip system, a circuit, a logic module, or software such as a chip or a circuit) that may be used in the message receiver.

The foregoing mainly describes the solutions provided in this application. Correspondingly, this application further provides a communication apparatus. The communication apparatus is configured to implement the foregoing methods. The communication apparatus may be the TA device in the foregoing method embodiments, or an apparatus including the TA device, or a component that may be used in the TA device, for example, a chip or a chip system. Alternatively, the communication apparatus may be the terminal device in the foregoing method embodiments, or an apparatus including the terminal device, or a component that may be used in the terminal device, for example, a chip or a chip system. Alternatively, the communication apparatus may be the message receiver in the foregoing method embodiments, or an apparatus including the message receiver, or a component that may be used in the message receiver, for example, a chip or a chip system.

It can be understood that, to implement the foregoing functions, the communication apparatus includes a corresponding hardware structure and/or software module for performing the functions. A person skilled in the art should easily be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used.

FIG. 12 is a diagram of a structure of a communication apparatus 120. The communication apparatus 120 includes a processing module 1201 and a transceiver module 1202. The communication apparatus 120 may be configured to implement the functions of the TA device, the terminal device, or the message receiver.

In some embodiments, the communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver device, a transceiver, or a communication interface.

In some embodiments, the transceiver module 1202 may include a receiving module and a sending module, respectively configured to perform a receiving step and a sending step performed by the TA device, the terminal device, or the message receiver in the foregoing method embodiments, and/or configured to support another process of the technologies described in this specification; and the processing module 1201 may be configured to perform a processing (for example, determining or generation) step performed by the TA device, the terminal device, or the message receiver in

the foregoing method embodiments, and/or configured to support another process of the technologies described in this specification.

When the communication apparatus 120 is configured to implement the functions of the TA device:

The processing module 1201 is configured to determine a pseudonymous identity PID of a terminal device *i*, where the PID of the terminal device *i* is determined based on a real identity RID of the terminal device *i* . The transceiver module 1202 is configured to send a first parameter to the terminal device *i*, where the first parameter indicates the PID of the terminal device *i*.

Optionally, the processing module 1201 is further configured to store PID information of the terminal device *i* by using a distributed ledger technology.

Optionally, that the processing module 1201 is further configured to store the PID information of the terminal device *i* by using the distributed ledger technology includes: The processing module 1201 is further configured to store a sparse Merkle tree SMT by using the distributed ledger technology; and the processing module 1201 is further configured to store the PID information of the terminal device *i* on a leaf node with an index of (2*i* - 1) in the SMT.

Optionally, the processing module 1201 is further configured to store a status of the PID information of the terminal device *i* by using the distributed ledger technology, where the status includes revoked or valid.

Optionally, that the processing module 1201 is further configured to store the status of the PID information of the terminal device *i* by using the distributed ledger technology includes: The processing module 1201 is further configured to store the SMT by using the distributed ledger technology; and the processing module 1201 is further configured to store the status of the PID information of the terminal device *i* on a leaf node with an index of (2*i*) in the SMT.

Optionally, that the processing module 1201 is configured to determine the PID of the terminal device *i* includes: The processing module 1201 is configured to: when a real identity list includes the RID of the terminal device *i* and no PID information of the terminal device *i* is stored by using the distributed ledger technology, determine the PID of the terminal device *i*.

Optionally, that the PID of the terminal device i is determined based on the RID of the terminal device *i* includes: The PID of the terminal device *i* is determined based on the RID of the terminal device *i* and at least one of the following: a master private key *s* of the TA device, a first hash function $H_1$, or a first timestamp $T_0$, where the first timestamp $T_0$ is a timestamp carried in a first message that is from the terminal device *i*, and the first message is used to request the PID of the terminal device *i*.

Optionally, the PID of the terminal device *i* meets the following relationship:

$$PID_i = RID_i \oplus H_1(s||T_0),$$

where

$PID_i$ represents the PID of the terminal device *i*, $RID_i$ represents the RID of the terminal device *i*, ⊕ represents an exclusive OR operation, and || is a character string connector.

Optionally, the first parameter is determined based on the PID of the terminal device *i* and the RID of the terminal device *i*.

Optionally, the processing module 1201 is further configured to determine a master public key of the TA device, where the master public key includes a first-part master public key and a second-part master public key, and the master public key is determined based on the master private key of the TA device and a generator of an additive group $G_1$.

Optionally, the master private key and/or the master public key meet/meets the following relationships:

$$s \in Z_q^*;$$

and

$$P_{pub} = \left(P_{pub1}, P_{pub2}\right) = (sP, s^{-1}P),$$

where

s represents the master private key, $Z_q^*$ represents an integer set with a value range of [1, *q* - 1], *q* is an order of the additive group $G_1$, $P_{pub}$ represents the master public key, $P_{pub1}$ represents the first-part master public key, $P_{pub2}$ represents the second-part master public key, and *P* represents the generator of the additive group $G_1$.

Optionally, the processing module 1201 is further configured to determine a partial private key $PSK_i$ of the terminal device *i*, where the partial private key $PSK_i$ of the terminal device *i* is determined based on at least one of the following: the master private key *s* of the TA device, the first hash function $H_1$, the RID of the terminal device *i*, the master

public key $P_{pub}$ of the TA device, a second hash function $H_2$, or a first nonce $\lambda_i$, where $\lambda_i \in Z_q^*$, and $Z_q^*$ represents an integer set with a value range of [1, $q$ - 1]; and the transceiver module 1202 is further configured to send a second parameter to the terminal device *i,* where the second parameter indicates the partial private key of the terminal device *i.*

Optionally, the partial private key of the terminal device *i* is as follows: $PSK_i = (\alpha_i, \kappa_i, \theta_i)$, where $\alpha_i$, $\kappa_i$, and $\theta_i$ meet the following relationships:

$$\alpha_i = s^{-1} + \lambda_i h_i, \text{ and } h_i = H_2(RID_i||P_{pub});$$

$$\kappa_i = \lambda_i H_1(RID_i);$$

and

$$\theta_i = s^{-1} H_1(RID_i),$$

where

$RID_i$ represents the RID of the terminal device *i,* and ‖ is a character string connector.

Optionally, the second parameter is determined based on the RID of the terminal device *i* and the partial private key $PSK_i$.

Optionally, the processing module 1201 is further configured to: when the terminal device *i* performs an unauthorized operation, set the status of the PID information of the terminal device *i* to revoked.

Optionally, the processing module 1201 is further configured to: when the terminal device *i* performs an unauthorized operation, determine the RID of the terminal device *i* based on the PID of the terminal device *i.*

Optionally, the processing module 1201 is further configured to add remarks about the unauthorized operation of the terminal device *i* in the real identity list.

When the communication apparatus 120 is configured to implement the functions of the terminal device:

The processing module 1201 is configured to generate a third message, where the third message includes a signature of original message text, and the signature of the original message text is determined based on a public key of a terminal device *i.* The transceiver module 1202 is configured to send the third message.

Optionally, that the signature of the original message text is determined based on the public key of the terminal device *i* includes: The signature of the original message text is determined based on the public key of the terminal device *i* and at least one of the following: a private key of the terminal device *i* or a first-part master public key of a trusted authority TA device, where a partial private key of the terminal device *i* is determined by the TA device.

Optionally, the signature of the original message text is expressed as $(\eta_i, \sigma_i)$, where $\eta_i$ and $\sigma_i$ meet the following relationships:

$$\eta_i = \gamma_i R_i;$$

and

$$\sigma_i = (\gamma_i \alpha_i + \beta_i) P_{pub1},$$

where

$R_i$ represents a second-part public key of the terminal device *i,* $\alpha_i$ and $\beta_i$ constitute the private key of the terminal device *i,* $P_{pub1}$ represents the first-part master public key of the TA device, and $\gamma_i$ is determined based on at least one of the following: a third hash function, the original message text, the PID of the terminal device *i,* a public key of the terminal device *i,* or a third timestamp, where the third timestamp is a timestamp carried in the third message.

Optionally, $\gamma_i$ meets the following relationship:

$$\gamma_i = H_3(M_i||PID_i||PK_i||T_i),$$

where

$H_3$ represents the third hash function, $M_i$ represents the original message text, $PID_i$ represents the PID of the terminal device *i,* $PK_i$ represents the public key of the terminal device *i,* $T_i$ represents the third timestamp, and ‖ is a character string connector.

Optionally, the transceiver module 1202 is further configured to receive a second parameter from the TA device, where the second parameter indicates the partial private key $PSK_i$ of the terminal device *i;* the processing module 1201 is further configured to determine the private key $SK_i$ of the terminal device *i* based on the partial private key $PSK_i$ of the terminal device *i;* the processing module 1201 is further configured to determine the public key $PK_i$ of the terminal device *i* based on the private key $SK_i$ of the terminal device *i* and a second-part master public key of the TA device; and the transceiver module 1202 is further configured to broadcast the public key $PK_i$ of the terminal device *i.*

Optionally, the partial private key of the terminal device *i* is as follows: $PSK_i = (\alpha_i, \kappa_i, \theta_i)$; and if $\alpha_i H_1(RID_i) = \theta_i + \kappa_i h_i$, the private key of the terminal device *i* is as follows: $SK_i = (\alpha_i, \beta_i)$, where $\beta_i \in Z_q^*$, and $Z_q^*$ represents an integer set with a value range of [1, $q$ - 1].

Optionally, the public key of the terminal device *i* is as follows: $PK_i = (U_i, R_i)$, where $U_i$ and $R_i$ meet the following relationships:

$$U_i = \beta_i P_{pub2};$$

and

$$R_i = \alpha_i P_{pub2},$$

where

$P_{pub2}$ represents the second-part master public key of the TA device.

When the communication apparatus 120 is configured to implement the functions of the message receiver: The transceiver module 1202 is configured to receive N messages from N terminal devices, where a message n of a terminal device n includes a signature of original message text n, n is a positive integer ranging from 1 to N, and N is a positive integer greater than 1. The processing module 1201 is configured to determine an aggregate signature based on signatures of original message text n in the N messages. The processing module 1201 is further configured to perform verification on the N messages based on the aggregate signature.

Optionally, the message n further includes a timestamp n, and that the processing module 1201 is configured to determine the aggregate signature includes: The processing module 1201 is configured to: when freshness of the message n meets a preset condition, determine the aggregate signature, where the freshness of the message n is determined based on the timestamp n of the message n.

Optionally, that the processing module 1201 is configured to determine the aggregate signature includes: The processing module 1201 is configured to: when PID information of the terminal device n is stored by using a distributed ledger technology and a status of the PID information is valid, determine the aggregate signature.

Optionally, that the processing module 1201 is configured to perform verification on the N messages based on the aggregate signature includes: The processing module 1201 is configured to determine a first bilinear mapping result and a second bilinear mapping result based on the aggregate signature, where when the first bilinear mapping result is the same as the second bilinear mapping result, the verification on the N messages succeeds.

Optionally, the aggregate signature includes $\sum_{n=1}^{N} \sigma_n$ and $\sum_{n=1}^{N}(\eta_n + U_n)$, where $\sigma_n$ and $\eta_n$ constitute the signature of the original message text in the message n, and $U_n$ represents a first-part public key of the terminal device n.

Optionally, the second bilinear mapping result is as follows:

$$e\left(\sum_{n=1}^{N} \sigma_n , P_{pub2}\right);$$

and

the first bilinear mapping result is as follows:

$$e\left(\sum_{n=1}^{N}(\eta_n + U_n), P_{pub1}\right),$$

where

$e$ represents a bilinear mapping relationship, $P_{pub1}$ represents a first-part master public key of a TA device, and $P_{pub2}$ represents a second-part master public key of the TA device.

All related content of the steps in the foregoing method embodiments may be cited in function descriptions of corresponding functional modules. Details are not described herein again.

In this application, the communication apparatus 120 may be presented by dividing the functional modules through integration. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 120 in FIG. 12 is a chip or a chip system, the functions or implementation processes of the transceiver module 1202 may be implemented by an input/output interface (or a communication interface) of the chip or the chip system, and the functions or implementation processes of the processing module 1201 may be implemented by a processor (or a processing circuit) of the chip or the chip system.

The communication apparatus 120 provided in this embodiment may perform the foregoing methods. Therefore, for technical effects that can be achieved by the communication apparatus, refer to the foregoing method embodiments. Details are not described herein again.

In a possible product form, the TA device, the terminal device, or the message receiver in embodiments of this application may alternatively be implemented by using the following components: one or more field programmable gate arrays (field programmable gate array, FPGA), a programmable logic device (programmable logic device, PLD), a controller, a state machine, a gate logic, a discrete hardware component, any other suitable circuit, or any combination of circuits that can perform the functions described in this application.

In another possible product form, the terminal device or the message receiver in embodiments of this application may be implemented by a general bus system structure. For ease of description, refer to FIG. 13. FIG. 13 is a diagram of a structure of a communication apparatus 1300 according to an embodiment of this application. The communication apparatus 1300 includes a processor 1301 and a transceiver 1302. The communication apparatus 1300 may be a terminal device, or a chip or a chip system in a terminal device. Alternatively, the communication apparatus 1300 may be a TA device, or a chip or a module in a TA device. FIG. 13 shows only main components of the communication apparatus 1300. In addition to the processor 1301 and the transceiver 1302, the communication apparatus may further include a memory 1303 and an input/output apparatus (not shown in the figure).

Optionally, the processor 1301 is mainly configured to process a communication protocol and communication data, control the entire communication apparatus, execute a software program, and process data of the software program. The memory 1303 is mainly configured to store a software program and data. The transceiver 1302 may include a radio frequency circuit and an antenna. The radio frequency circuit is mainly configured to perform conversion between a baseband signal and a radio frequency signal, and process the radio frequency signal. The antenna is mainly configured to send and receive a radio frequency signal in a form of an electromagnetic wave. The input/output apparatus, for example, a touchscreen, a display, or a keyboard, is mainly configured to receive data input by a user and output data to the user.

Optionally, the processor 1301, the transceiver 1302, and the memory 1303 may be connected through a communication bus.

After the communication apparatus is powered on, the processor 1301 may read the software program in the memory 1303, interpret and execute instructions of the software program, and process data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independently of the communication apparatus.

In some embodiments, in terms of hardware implementation, a person skilled in the art may figure out that the communication apparatus 120 may be in a form of the communication apparatus 1300 shown in FIG. 13.

In an example, the functions or implementation processes of the processing module 1201 in FIG. 12 may be implemented by the processor 1301 in the communication apparatus 1300 shown in FIG. 13 by invoking computer-executable instructions stored in the memory 1303, and the functions or implementation processes of the transceiver module 1202 in FIG. 12 may be implemented by the transceiver 1302 in the communication apparatus 1300 shown in FIG. 13.

In still another possible product form, the TA device, the terminal device, or the message receiver in this application may be in a composition structure shown in FIG. 14, or may include components shown in FIG. 14. FIG. 14 is a diagram of composition of a communication apparatus 1400 according to this application. The communication apparatus 1400 may be a terminal device, or a chip or a system-on-a-chip in a terminal device; or may be a TA device, or a module or a system-on-a-chip in a TA device.

As shown in FIG. 14, the communication apparatus 1400 includes at least one processor 1401 and at least one communication interface (in FIG. 14, only an example in which one communication interface 1404 and one processor 1401 are included is used for description). Optionally, the communication apparatus 1400 may further include a communication bus 1402 and a memory 1403.

The processor 1401 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1401 may be another apparatus with a processing function, for example, a circuit, a component, or a software module. This is not limited.

The communication bus 1402 is configured to connect different components of the communication apparatus 1400, to enable communication between different components. The communication bus 1402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used in FIG. 14 for representation, but this does not mean that there is only one bus or only one type of bus.

The communication interface 1404 is configured to communicate with another device or a communication network. For example, the communication interface 1404 may be a module, a circuit, a transceiver, or any apparatus that can implement communication. Optionally, the communication interface 1404 may alternatively be an input/output interface located in the processor 1401, to implement signal input and signal output of the processor.

The memory 1403 may be an apparatus with a storage function, and is configured to store instructions and/or data. The instructions may be a computer program.

For example, the memory 1403 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), or a magnetic disk storage medium or another magnetic storage device. This is not limited.

It should be noted that the memory 1403 may be independent of the processor 1401, or may be integrated with the processor 1401. The memory 1403 may be located inside the communication apparatus 1400, or may be located outside the communication apparatus 1400. This is not limited. The processor 1401 is configured to execute the instructions stored in the memory 1403, to implement the methods provided in the following embodiments of this application.

In an optional implementation, the communication apparatus 1400 may further include an output device 1405 and an input device 1406. The output device 1405 communicates with the processor 1401, and may display information in a plurality of manners. For example, the output device 1405 may be a liquid crystal display (liquid crystal display, LCD), a light emitting diode (light emitting diode, LED) display device, a cathode ray tube (cathode ray tube, CRT) display device, or a projector (projector). The input device 1406 communicates with the processor 1401, and may receive an input of a user in a plurality of manners. For example, the input device 1406 may be a mouse, a keyboard, a touchscreen device, or a sensor device.

In some embodiments, in terms of hardware implementation, a person skilled in the art may figure out that the communication apparatus 120 may be in a form of the communication apparatus 1400 shown in FIG. 14.

In an example, the functions or implementation processes of the processing module 1201 in FIG. 12 may be implemented by the processor 1401 in the communication apparatus 1400 shown in FIG. 14 by invoking computer-executable instructions stored in the memory 1403, and the functions or implementation processes of the transceiver module 1202 in FIG. 12 may be implemented by the communication interface 1404 in the communication apparatus 1400 shown in FIG. 14.

It should be noted that the structure shown in FIG. 14 does not constitute a specific limitation on the TA device, the terminal device, or the message receiver. For example, in some other embodiments of this application, the TA device, the

terminal device, or the message receiver may include more or fewer components than those shown in the figure, or some components may be combined, or some components may be split, or the components may be arranged differently. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may alternatively not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be read from the memory directly or through another component) and transmit the computer-executable instructions to the processor.

In still another possible implementation, the communication apparatus further includes a communication interface, and the communication interface is configured to communicate with a module other than the communication apparatus.

It can be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or computer instructions. When the computer program or the computer instructions is/are executed by a computer, functions in any one of the foregoing method embodiment are implemented.

This application further provides a computer program product. When the computer program product is executed by a computer, functions in any one of the foregoing method embodiments are implemented.

A person of ordinary skill in the art can understand that, for ease and brevity of description, for detailed working processes of the foregoing system, apparatus, and units, reference may be made to corresponding processes in the foregoing method embodiments. Details are not described herein again.

It can be understood that the system, apparatus, and method described in this application may alternatively be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separated, to be specific, may be located in one place, or may be distributed on a plurality of network units. Components shown as units may or may not be physical units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When the embodiments are implemented by a software program, all or some of the embodiments may be implemented in a form of a computer program product. The computer program product includes one or more computer instructions. When the computer instructions are loaded and executed on a computer, all or some of processes or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, during implementation of this application

that claims protection, a person skilled in the art may understand and implement another variation of the disclosed embodiments by viewing the accompanying drawings, disclosed content, and appended claims. In the claims, the term "comprising" (comprising) does not exclude another component or step, and "a" or "an" does not exclude a case of a plurality of items. A single processor or another unit may implement several functions enumerated in the claims. Some measures are recorded in dependent claims that are different from each other, but this does not mean that these measures cannot be combined to produce better effects.

Although this application is described with reference to specific features and embodiments thereof, it is clear that various modifications and combinations may be made to the features and the embodiments without departing from the scope of this application. Correspondingly, this specification and the accompanying drawings are merely example descriptions of this application defined in the appended claims, and are considered as covering any and all modifications, variations, combinations or equivalents within the scope of this application. Clearly, a person skilled in the art can make various modifications and variations to this application without departing from the scope of this application. This application is intended to cover these modifications and variations of this application provided that they fall within the scope of the claims of this application and their equivalent technologies.

## Claims

**1.** An identity management method, wherein the method is applied to a trusted authority TA device, and the method comprises:

determining a pseudonymous identity PID of a terminal device *i,* wherein the PID of the terminal device *i* is determined based on a real identity RID of the terminal device *i;* and
sending a first parameter to the terminal device *i,* wherein the first parameter indicates the PID of the terminal device *i.*

**2.** The method according to claim 1, wherein the method further comprises:
storing PID information of the terminal device *i* by using a distributed ledger technology.

**3.** The method according to claim 2, wherein storing the PID information of the terminal device *i* by using the distributed ledger technology comprises:

storing a sparse Merkle tree SMT by using the distributed ledger technology; and
storing the PID information of the terminal device *i* on a leaf node with an index of (2*i* - 1) in the SMT.

**4.** The method according to claim 2 or 3, wherein the method further comprises:
storing a status of the PID information of the terminal device *i* by using the distributed ledger technology, wherein the status comprises revoked or valid.

**5.** The method according to claim 4, wherein storing the status of the PID information of the terminal device *i* by using the distributed ledger technology comprises:

storing the SMT by using the distributed ledger technology; and
storing the status of the PID information of the terminal device *i* on a leaf node with an index of (2*i*) in the SMT.

**6.** The method according to any one of claims 1 to 5, wherein determining the PID of the terminal device *i* comprises:
when a real identity list comprises the RID of the terminal device *i* and no PID information of the terminal device *i* is stored by using the distributed ledger technology, determining the PID of the terminal device *i.*

**7.** The method according to any one of claims 1 to 6, wherein that the PID of the terminal device *i* is determined based on the RID of the terminal device *i* comprises:

the PID of the terminal device *i* is determined based on the RID of the terminal device *i* and at least one of the following: a master private key *s* of the TA device, a first hash function $H_1$, or a first timestamp $T_0$, wherein the first timestamp $T_0$ is a timestamp carried in a first message that is from the terminal device *i,* and the first message is used to request the PID of the terminal device *i.*

**8.** The method according to claim 7, wherein the PID of the terminal device *i* meets the following relationship:

$$PID_i = RID_i \oplus H_1(s||T_0),$$

wherein
$PID_i$ represents the PID of the terminal device *i*, $RID_i$ represents the RID of the terminal device i, ⊕ represents an exclusive OR operation, and || is a character string connector.

**9.** The method according to any one of claims 1 to 8, wherein the first parameter is determined based on the PID of the terminal device *i* and the RID of the terminal device *i.*

**10.** The method according to any one of claims 1 to 9, wherein the method further comprises: determining a master public key of the TA device, wherein the master public key comprises a first-part master public key and a second-part master public key, and the master public key is determined based on the master private key of the TA device and a generator of an additive group $G_1$.

**11.** The method according to claim 10, wherein the master private key and/or the master public key meet/meets the following relationships:

$$s \in Z_q^*;$$

and

$$P_{pub} = (P_{pub1}, P_{pub2}) = (sP, s^{-1}P),$$

wherein

s represents the master private key, $Z_q^*$ represents an integer set with a value range of *[1, q* - 1], *q* is an order of the additive group $G_1$, $P_{pub}$ represents the master public key, $P_{pub1}$ represents the first-part master public key, $P_{pub2}$ represents the second-part master public key, and *P* represents the generator of the additive group $G_1$.

**12.** The method according to any one of claims 1 to 11, wherein the method further comprises:

determining a partial private key $PSK_i$ of the terminal device *i,* wherein the partial private key $PSK_i$ of the terminal device *i* is determined based on at least one of the following: the master private key s of the TA device, the first hash function $H_1$, the RID of the terminal device *i,* the master public key $P_{pub}$ of the TA device, a second hash function $H_2$, or a first nonce $\lambda_i$, wherein $\lambda_i \in Z_q^*$, and $Z_q^*$ represents an integer set with a value range of [1, *q* - 1]; and
sending a second parameter to the terminal device *i,* wherein the second parameter indicates the partial private key of the terminal device *i.*

**13.** The method according to claim 12, wherein the partial private key of the terminal device *i* is as follows: $PSK_i = (\alpha_i, \kappa_i, \theta_i)$, wherein $\alpha_i$, $\kappa_i$, and $\theta_i$ meet the following relationships:

$$\alpha_i = s^{-1} + \lambda_i h_i, \text{ and } h_i = H_2(RID_i||P_{pub});$$

$$\kappa_i = \lambda_i H_1(RID_i);$$

and

$$\theta_i = s^{-1} H_1(RID_i),$$

wherein
$RID_i$ represents the RID of the terminal device *i,* and ‖ is a character string connector.

**14.** The method according to claim 12 or 13, wherein the second parameter is determined based on the RID of the terminal device *i* and the partial private key $PSK_i$.

**15.** The method according to claim 4 or 5, wherein the method further comprises:
when the terminal device *i* performs an unauthorized operation, setting the status of the PID information of the terminal device *i* to revoked.

**16.** The method according to any one of claims 1 to 15, wherein the method further comprises:
when the terminal device *i* performs an unauthorized operation, determining the RID of the terminal device *i* based on the PID of the terminal device *i.*

**17.** The method according to claim 16, wherein the method further comprises: adding remarks about the unauthorized operation of the terminal device *i* in the real identity list.

**18.** A message sending method, wherein the method comprises:

generating a third message, wherein the third message comprises a signature of original message text, and the signature of the original message text is determined based on a public key of the terminal device *i;* and
sending the third message.

**19.** The method according to claim 18, wherein that the signature of the original message text is determined based on the public key of the terminal device *i* comprises:
the signature of the original message text is determined based on the public key of the terminal device *i* and at least one of the following: a private key of the terminal device *i* or a first-part master public key of a trusted authority TA device, wherein a partial private key of the terminal device *i* is determined by the TA device.

**20.** The method according to claim 19, wherein the signature of the original message text is expressed as ($\eta_i$, $\sigma_i$), wherein $\eta_i$ and $\sigma_i$ meet the following relationships:

$$\eta_i = \gamma_i R_i;$$

and

$$\sigma_i = (\gamma_i \alpha_i + \beta_i) P_{pub1},$$

wherein

$R_i$ represents a second-part public key of the terminal device *i,* $\alpha_i$ and $\beta_i$ constitute the private key of the terminal device *i,* and $P_{pub1}$ represents the first-part master public key of the TA device; and
$\gamma_i$ is determined based on at least one of the following: a third hash function, the original message text, the PID of the terminal device *i,* a public key of the terminal device *i,* or a third timestamp, wherein the third timestamp is a timestamp carried in the third message.

**21.** The method according to claim 20, wherein $\gamma_i$ meets the following relationship:

$$\gamma_i = H_3(M_i || PID_i || PK_i || T_i),$$

wherein
$H_3$ represents the third hash function, $M_i$ represents the original message text, $PID_i$ represents the PID of the terminal device *i,* $PK_i$ represents the public key of the terminal device *i,* $T_i$ represents the third timestamp, and || is a character string connector.

**22.** The method according to any one of claims 18 to 21, wherein before generating the third message, the method further comprises:

receiving a second parameter from the TA device, wherein the second parameter indicates the partial private key

$PSK_i$ of the terminal device *i;*
determining the private key $SK_i$ of the terminal device *i* based on the partial private key $PSK_i$ of the terminal device *i;*
determining the public key $PK_i$ of the terminal device *i* based on the private key $SK_i$ of the terminal device *i* and a second-part master public key of the TA device; and
broadcasting the public key $PK_i$ of the terminal device *i.*

**23.** The method according to claim 22, wherein the partial private key of the terminal device *i* is as follows: $PSK_i = (\alpha_i, \kappa_i, \theta_i)$; and

if $\alpha_i H_1(RID_i) = \theta_i + \kappa_i h_i$, the private key of the terminal device *i* is as follows: $SK_i = (\alpha_i, \beta_i)$, wherein $\beta_i \in Z_q^*$, and $Z_q^*$ represents an integer set with a value range of [1, $q$ - 1].

**24.** The method according to claim 23, wherein the public key of the terminal device i is as follows: $PK_i = (U_i, R_i)$, wherein $U_i$ and $R_i$ meet the following relationships:

$$U_i = \beta_i P_{pub2};$$

and

$$R_i = \alpha_i P_{pub2},$$

wherein
$P_{pub2}$ represents the second-part master public key of the TA device.

**25.** A message verification method, wherein the method comprises:

receiving N messages from N terminal devices, wherein a message n of a terminal device n comprises a signature of original message text n, n is a positive integer ranging from 1 to N, and N is a positive integer greater than 1;
determining an aggregate signature based on signatures of original message text n in the N messages; and
performing verification on the N messages based on the aggregate signature.

**26.** The method according to claim 25, wherein the message n further comprises a timestamp n, and determining the aggregate signature comprises:
when freshness of the message n meets a preset condition, determining the aggregate signature, wherein the freshness of the message n is determined based on the timestamp n of the message n.

**27.** The method according to claim 25 or 26, wherein determining the aggregate signature comprises:
when PID information of the terminal device n is stored by using a distributed ledger technology and a status of the PID information is valid, determining the aggregate signature.

**28.** The method according to any one of claims 25 to 27, wherein performing verification on the N messages based on the aggregate signature comprises:

determining a first bilinear mapping result and a second bilinear mapping result based on the aggregate signature, wherein
when the first bilinear mapping result is the same as the second bilinear mapping result, the verification on the N messages succeeds.

**29.** The method according to claim 28, wherein the aggregate signature comprises: $\sum_{n=1}^{N} \sigma_n$ and $\sum_{n=1}^{N} (\eta_n + U_n)$, wherein
$\sigma_n$ and $\eta_n$ constitute the signature of the original message text in the message *n*, and $U_n$ represents a first-part public key of the terminal device n.

**30.** The method according to claim 29, wherein the second bilinear mapping result is as follows:

$$e\left(\sum_{n=1}^{N} \sigma_n , P_{pub2}\right);$$

and
the first bilinear mapping result is as follows:

$$e\left(\sum_{n=1}^{N} (\eta_n + U_n) , P_{pub1}\right),$$

wherein
e represents a bilinear mapping relationship, $P_{pub1}$ represents a first-part master public key of a TA device, and $P_{pub2}$ represents a second-part master public key of the TA device.

**31.** A communication apparatus, wherein the communication apparatus comprises a processing module and a transceiver module, wherein

the processing module is configured to determine a pseudonymous identity PID of a terminal device *i,* wherein the PID of the terminal device *i* is determined based on a real identity RID of the terminal device *i*; and
the transceiver module is configured to send a first parameter to the terminal device *i*, wherein the first parameter indicates the PID of the terminal device *i*.

**32.** The communication apparatus according to claim 31, wherein the processing module is further configured to store PID information of the terminal device *i* by using a distributed ledger technology.

**33.** The communication apparatus according to claim 32, wherein that the processing module is further configured to store the PID information of the terminal device *i* by using the distributed ledger technology comprises:

the processing module is further configured to store a sparse Merkle tree SMT by using the distributed ledger technology; and
the processing module is further configured to store the PID information of the terminal device *i* on a leaf node with an index of (2i - 1) in the SMT.

**34.** The communication apparatus according to claim 32 or 33, wherein the processing module is further configured to store a status of the PID information of the terminal device *i* by using the distributed ledger technology, wherein the status comprises revoked or valid.

**35.** The communication apparatus according to claim 34, wherein that the processing module is further configured to store the status of the PID information of the terminal device *i* by using the distributed ledger technology comprises:

the processing module is further configured to store the SMT by using the distributed ledger technology; and
the processing module is further configured to store the status of the PID information of the terminal device *i* on a leaf node with an index of (2i) in the SMT.

**36.** The communication apparatus according to any one of claims 31 to 35, wherein that the processing module is configured to determine the PID of the terminal device *i* comprises:
the processing module is configured to: when a real identity list comprises the RID of the terminal device *i* and no PID information of the terminal device *i* is stored by using the distributed ledger technology, determine the PID of the terminal device *i*.

**37.** The communication apparatus according to any one of claims 31 to 36, wherein that the PID of the terminal device *i* is determined based on the RID of the terminal device *i* comprises:

the PID of the terminal device *i* is determined based on the RID of the terminal device *i* and at least one of the following: a master private key s of the TA device, a first hash function $H_1$, or a first timestamp $T_0$, wherein the first timestamp $T_0$ is a timestamp carried in a first message that is from the terminal device *i,* and the first message is used to request the PID of the terminal device *i.*

**38.** The communication apparatus according to claim 37, wherein the PID of the terminal device *i* meets the following relationship:

$$PID_i = RID_i \oplus H_1(s||T_0),$$

wherein
$PID_i$ represents the PID of the terminal device *i,* $RID_i$ represents the RID of the terminal device *i*, ⊕ represents an exclusive OR operation, and ‖ is a character string connector.

**39.** The communication apparatus according to any one of claims 31 to 38, wherein the first parameter is determined based on the PID of the terminal device *i* and the RID of the terminal device *i.*

**40.** The communication apparatus according to any one of claims 31 to 39, wherein the processing module is further configured to determine a master public key of the TA device, wherein the master public key comprises a first-part master public key and a second-part master public key, and the master public key is determined based on the master private key of the TA device and a generator of an additive group $G_1$.

**41.** The communication apparatus according to claim 40, wherein the master private key and/or the master public key meet/meets the following relationships:

$$s \in Z_q^*;$$

and

$$P_{pub} = (P_{pub1}, P_{pub2}) = (sP, s^{-1}P),$$

wherein
s represents the master private key, $Z_q^*$ represents an integer set with a value range of *[1, q* - 1], *q* is an order of the additive group $G_1$, $P_{pub}$ represents the master public key, $P_{pub1}$ represents the first-part master public key, $P_{pub2}$ represents the second-part master public key, and P represents the generator of the additive group $G_1$.

**42.** The communication apparatus according to any one of claims 31 to 41, wherein the processing module is further configured to determine a partial private key $PSK_i$ of the terminal device *i,* wherein the partial private key $PSK_i$ of the terminal device *i* is determined based on at least one of the following: the master private key s of the TA device, the first hash function $H_1$, the RID of the terminal device *i,* the master public key $P_{pub}$ of the TA device, a second hash function $H_2$, or a first nonce $\lambda_i$, wherein $\lambda_i \in Z_q^*$, and $Z_q^*$ represents an integer set with a value range of [1, *q* - 1]; and the transceiver module is further configured to send a second parameter to the terminal device *i,* wherein the second parameter indicates the partial private key of the terminal device *i.*

**43.** The communication apparatus according to claim 42, wherein the partial private key of the terminal device *i* is as follows: $PSK_i = (\alpha_i, \kappa_i, \theta_i)$, wherein $\alpha_i$, $\kappa_i$, and $\theta_i$ meet the following relationships:

$$\alpha_i = s^{-1} + \lambda_i h_i, \text{ and } h_i = H_2(RID_i||P_{pub});$$

$$\kappa_i = \lambda_i H_1(RID_i);$$

and

$$\theta_i = s^{-1} H_1(RID_i),$$

wherein
$RID_i$ represents the RID of the terminal device *i,* and ‖ is a character string connector.

**44.** The communication apparatus according to claim 42 or 43, wherein the second parameter is determined based on the RID of the terminal device *i* and the partial private key $PSK_i$.

**45.** The communication apparatus according to claim 34 or 35, wherein the processing module is further configured to: when the terminal device *i* performs an unauthorized operation, set the status of the PID information of the terminal device *i* to revoked.

**46.** The communication apparatus according to any one of claims 31 to 45, wherein the processing module is further configured to: when the terminal device *i* performs an unauthorized operation, determine the RID of the terminal device *i* based on the PID of the terminal device *i.*

**47.** The communication apparatus according to claim 46, wherein the processing module is further configured to add remarks about the unauthorized operation of the terminal device *i* in the real identity list.

**48.** A communication apparatus, wherein the communication apparatus comprises a processing module and a transceiver module, wherein

the processing module is configured to generate a third message, wherein the third message comprises a signature of original message text, and the signature of the original message text is determined based on a public key of the terminal device *i*; and
the transceiver module is configured to send the third message.

**49.** The communication apparatus according to claim 48, wherein that the signature of the original message text is determined based on the public key of the terminal device *i* comprises:
the signature of the original message text is determined based on the public key of the terminal device *i* and at least one of the following: a private key of the terminal device *i* or a first-part master public key of a trusted authority TA device, wherein a partial private key of the terminal device *i* is determined by the TA device.

**50.** The communication apparatus according to claim 49, wherein the signature of the original message text is expressed as $(\eta_i, \sigma_i)$, wherein $\eta_i$ and $\sigma_i$ meet the following relationships:

$$\eta_i = \gamma_i R_i;$$

and

$$\sigma_i = (\gamma_i \alpha_i + \beta_i) P_{pub1},$$

wherein

$R_i$ represents a second-part public key of the terminal device *i,* $\alpha_i$ and $\beta_i$ constitute the private key of the terminal device *i,* and $P_{pub1}$ represents the first-part master public key of the TA device; and
$\gamma_i$ is determined based on at least one of the following: a third hash function, the original message text, the PID of the terminal device *i,* a public key of the terminal device *i,* or a third timestamp, wherein the third timestamp is a timestamp carried in the third message.

**51.** The communication apparatus according to claim 50, wherein $\gamma_i$ meets the following relationship:

$$\gamma_i = H_3(M_i || PID_i || PK_i || T_i),$$

wherein

$H_3$ represents the third hash function, $M_i$ represents the original message text, $PID_i$ represents the PID of the terminal device $i$, $PK_i$ represents the public key of the terminal device $i$, $T_i$ represents the third timestamp, and $\|$ is a character string connector.

**52.** The communication apparatus according to any one of claims 48 to 51, wherein

the transceiver module is further configured to receive a second parameter from the TA device, wherein the second parameter indicates the partial private key $PSK_i$ of the terminal device $i$;
the processing module is further configured to determine the private key $SK_i$ of the terminal device $i$ based on the partial private key $PSK_i$ of the terminal device $i$;
the processing module is further configured to determine the public key $PK_i$ of the terminal device $i$ based on the private key $SK_i$ of the terminal device $i$ and a second-part master public key of the TA device; and
the transceiver module is further configured to broadcast the public key $PK_i$ of the terminal device $i$.

**53.** The communication apparatus according to claim 52, wherein the partial private key of the terminal device $i$ is as follows: $PSK_i = (\alpha_i, \kappa_i, \theta_i)$; and

if $\alpha_i H_1(RID_i) = \theta_i + \kappa_i h_i$, the private key of the terminal device $i$ is as follows: $SK_i = (\alpha_i, \beta_i)$, wherein $\beta_i \in Z_q^*$, and $Z_q^*$ represents an integer set with a value range of [1, $q$ - 1].

**54.** The communication apparatus according to claim 53 or 54, wherein the public key of the terminal device $i$ is as follows: $PK_i = (U_i, R_i)$, wherein $U_i$ and $R_i$ meet the following relationships:

$$U_i = \beta_i P_{pub2};$$

and

$$R_i = \alpha_i P_{pub2},$$

wherein
$P_{pub2}$ represents the second-part master public key of the TA device.

**55.** A communication apparatus, wherein the communication apparatus comprises a processing module and a transceiver module, wherein

the transceiver module is configured to receive N messages from N terminal devices, wherein a message n of a terminal device n comprises a signature of original message text n, n is a positive integer ranging from 1 to N, and N is a positive integer greater than 1;
the processing module is configured to determine an aggregate signature based on signatures of original message text n in the N messages; and
the processing module is further configured to perform verification on the N messages based on the aggregate signature.

**56.** The communication apparatus according to claim 55, wherein the message n further comprises a timestamp n, and that the processing module is configured to determine the aggregate signature comprises:
the processing module is configured to: when freshness of the message n meets a preset condition, determine the aggregate signature, wherein the freshness of the message n is determined based on the timestamp n of the message n.

**57.** The communication apparatus according to claim 55 or 56, wherein that the processing module is configured to determine the aggregate signature comprises:
the processing module is configured to: when PID information of the terminal device n is stored by using a distributed ledger technology and a status of the PID information is valid, determine the aggregate signature.

**58.** The communication apparatus according to any one of claims 55 to 57, wherein that the processing module is configured to perform verification on the N messages based on the aggregate signature comprises:

the processing module is configured to determine a first bilinear mapping result and a second bilinear mapping result based on the aggregate signature, wherein
when the first bilinear mapping result is the same as the second bilinear mapping result, the verification on the N messages succeeds.

**59.** The communication apparatus according to claim 58, wherein the aggregate signature comprises: $\sum_{n=1}^{N} \sigma_n$ and $\sum_{n=1}^{N} (\eta_n + U_n)$, wherein
$\sigma_n$ and $\eta_n$ constitute the signature of the original message text in the message n, and $U_n$ represents a first-part public key of the terminal device n.

**60.** The communication apparatus according to claim 59, wherein the second bilinear mapping result is as follows:

$$\boldsymbol{e}\left(\sum_{n=1}^{N} \sigma_n, P_{pub2}\right);$$

and
the first bilinear mapping result is as follows:

$$\boldsymbol{e}\left(\sum_{n=1}^{N} (\eta_n + U_n), P_{pub1}\right),$$

wherein
e represents a bilinear mapping relationship, $P_{pub1}$ represents a first-part master public key of a TA device, and $P_{pub2}$ represents a second-part master public key of the TA device.

**61.** A communication apparatus, wherein the communication apparatus comprises a processor, and the processor is configured to run a computer program or computer instructions, to enable the communication apparatus to perform the method according to any one of claims 1 to 17, or enable the communication apparatus to perform the method according to any one of claims 18 to 24, or enable the communication apparatus to perform the method according to any one of claims 25 to 30.

**62.** A computer-readable storage medium, wherein the computer-readable storage medium stores computer instructions or a computer program, and when the computer instructions or the computer program are/is run on a computer, the method according to any one of claims 1 to 17 is performed, or the method according to any one of claims 18 to 24 is performed, or the method according to any one of claims 25 to 30 is performed.

**63.** A computer program product, wherein the computer program product comprises program instructions, and when the program instructions are executed by a processor, the method according to any one of claims 1 to 17 is implemented, or the method according to any one of claims 18 to 24 is implemented, or the method according to any one of claims 25 to 30 is implemented.

**64.** A communication apparatus, wherein the communication apparatus comprises a unit or a module for performing the method according to any one of claims 1 to 17, or the communication apparatus comprises a unit or a module for performing the method according to any one of claims 18 to 24, or the communication apparatus comprises a module for performing the method according to any one of claims 25 to 30.

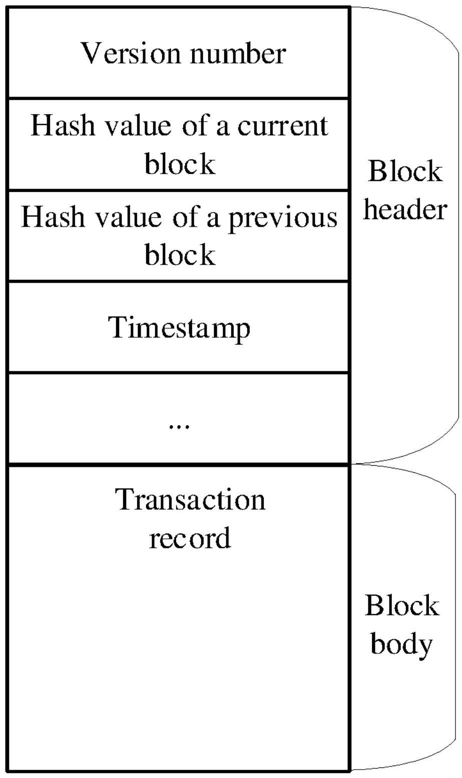
Version number
Hash value of a current block
Hash value of a previous block
Timestamp
...
Transaction record
Block header
Block body

FIG. 1

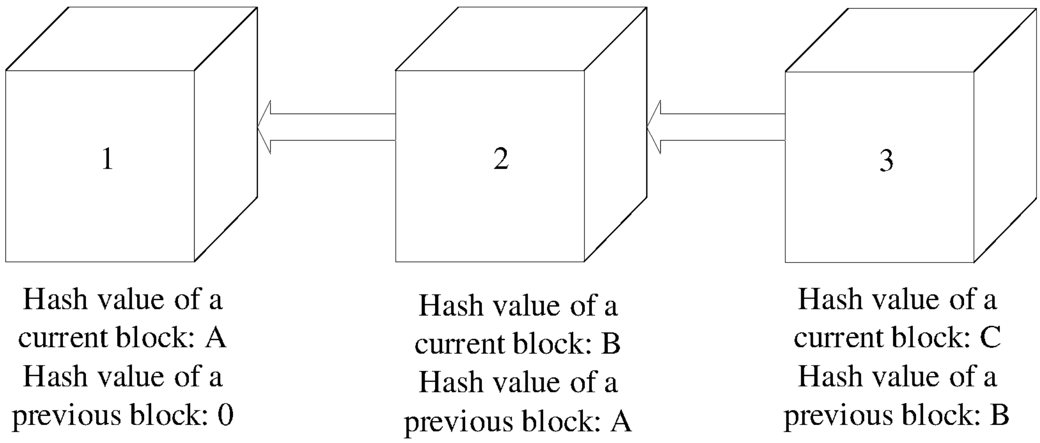
1
2
3
Hash value of a current block: A
Hash value of a previous block: 0
Hash value of a current block: B
Hash value of a previous block: A
Hash value of a current block: C
Hash value of a previous block: B

FIG. 2

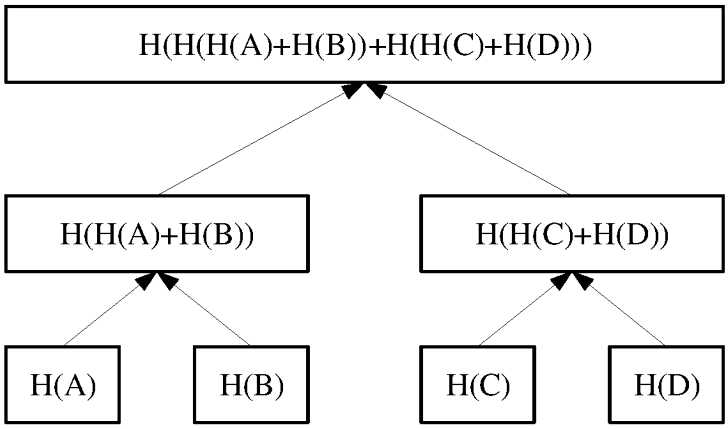
H(H(H(A)+H(B))+H(H(C)+H(D)))
H(H(A)+H(B))
H(H(C)+H(D))
H(A)
H(B)
H(C)
H(D)

FIG. 3

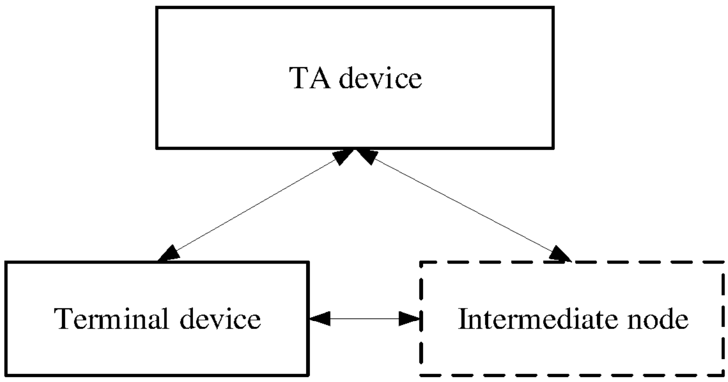
TA device
Terminal device
Intermediate node

FIG. 4

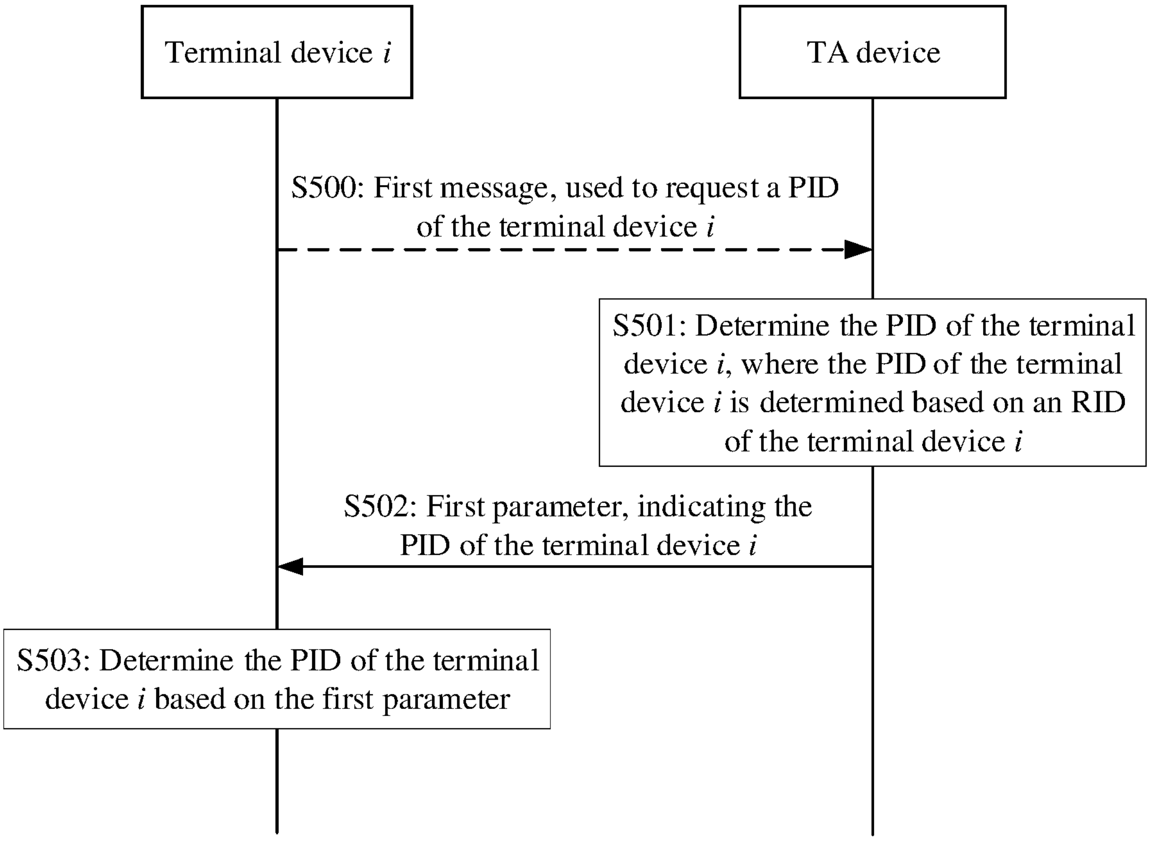
Terminal device i
TA device
S500: First message, used to request a PID of the terminal device i
S501: Determine the PID of the terminal device i, where the PID of the terminal device i is determined based on an RID of the terminal device i
S502: First parameter, indicating the PID of the terminal device i
S503: Determine the PID of the terminal device i based on the first parameter

FIG. 5

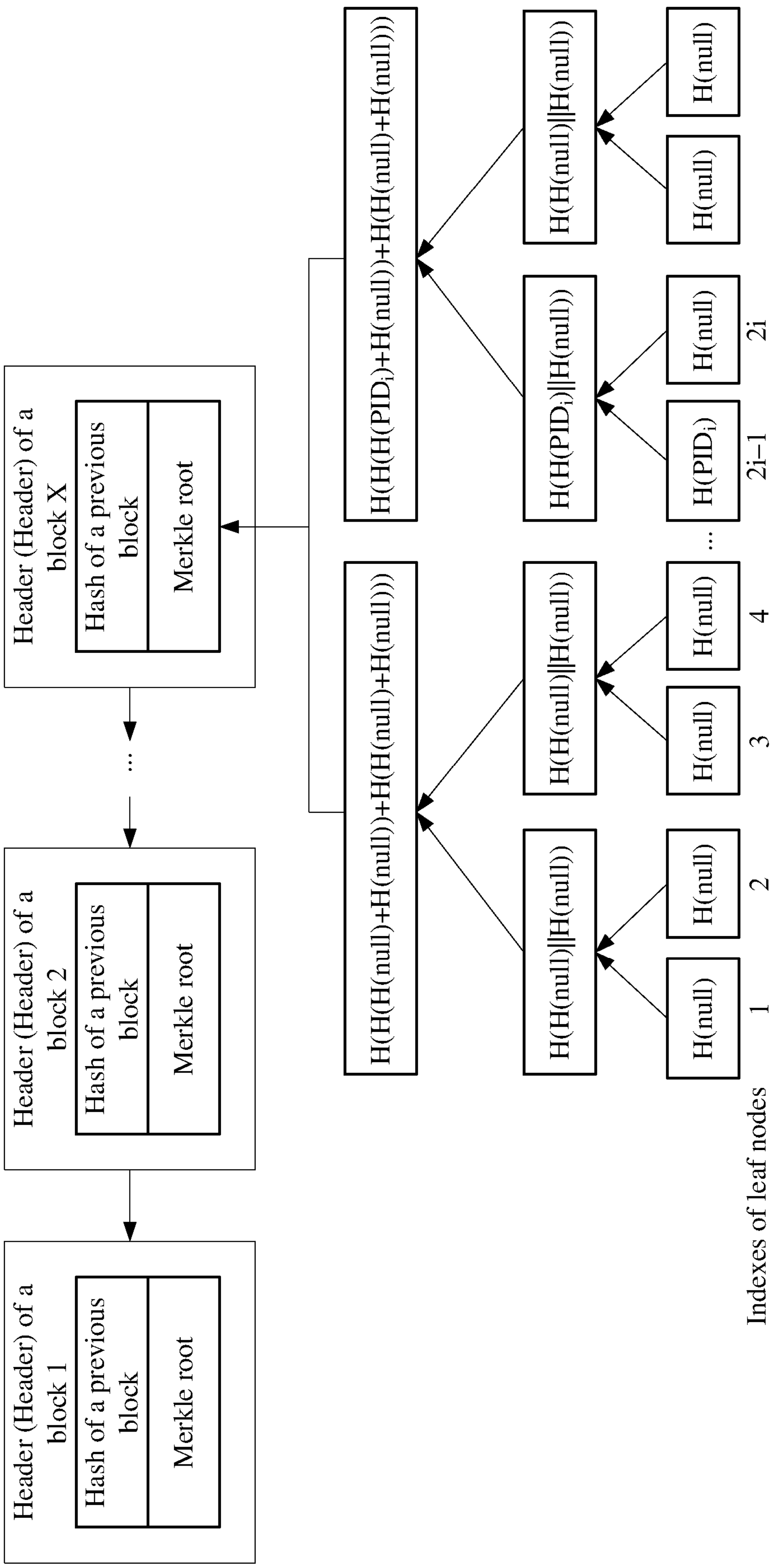
Header (Header) of a block 1
Hash of a previous block
Merkle root
Header (Header) of a block 2
Hash of a previous block
Merkle root
...
Header (Header) of a block X
Hash of a previous block
Merkle root
H(H(H(null)+H(null))+H(H(null)+H(null)))
H(H(H(PID$_i$)+H(null))+H(H(null)+H(null)))
H(H(null)||H(null))
H(H(null)||H(null))
H(H(PID$_i$)||H(null))
H(H(null)||H(null))
H(null)
H(null)
H(null)
H(null)
...
H(PID$_i$)
H(null)
H(null)
H(null)
Indexes of leaf nodes
1
2
3
4
2i–1
2i

FIG. 6a

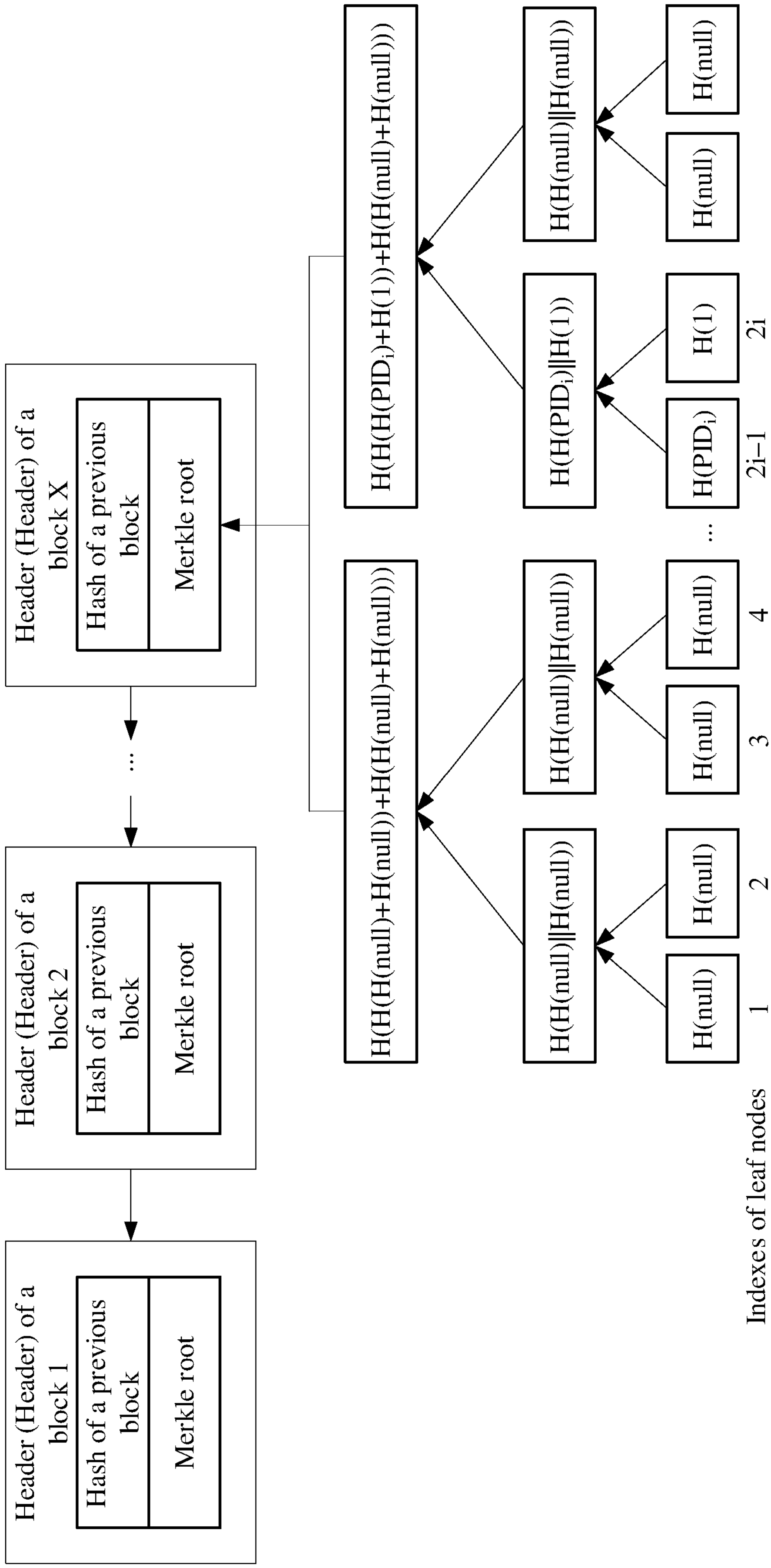
Header (Header) of a block 1
Hash of a previous block
Merkle root
Header (Header) of a block 2
Hash of a previous block
Merkle root
...
Header (Header) of a block X
Hash of a previous block
Merkle root
H(H(H(null)+H(null))+H(H(null)+H(null)))
H(H(H(PID$_i$)+H(1))+H(H(null)+H(null)))
H(H(null)||H(null))
H(H(null)||H(null))
H(H(PID$_i$)||H(1))
H(H(null)||H(null))
H(null)
H(null)
H(null)
H(null)
...
H(PID$_i$)
H(1)
H(null)
H(null)
Indexes of leaf nodes
1
2
3
4
2i−1
2i

FIG. 6b

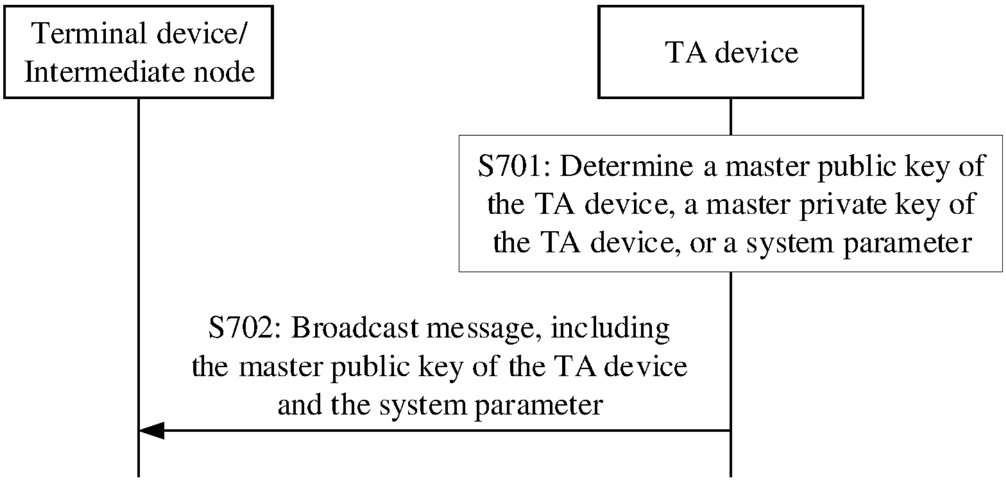
Terminal device/
Intermediate node
TA device
S701: Determine a master public key of the TA device, a master private key of the TA device, or a system parameter
S702: Broadcast message, including the master public key of the TA device and the system parameter

FIG. 7

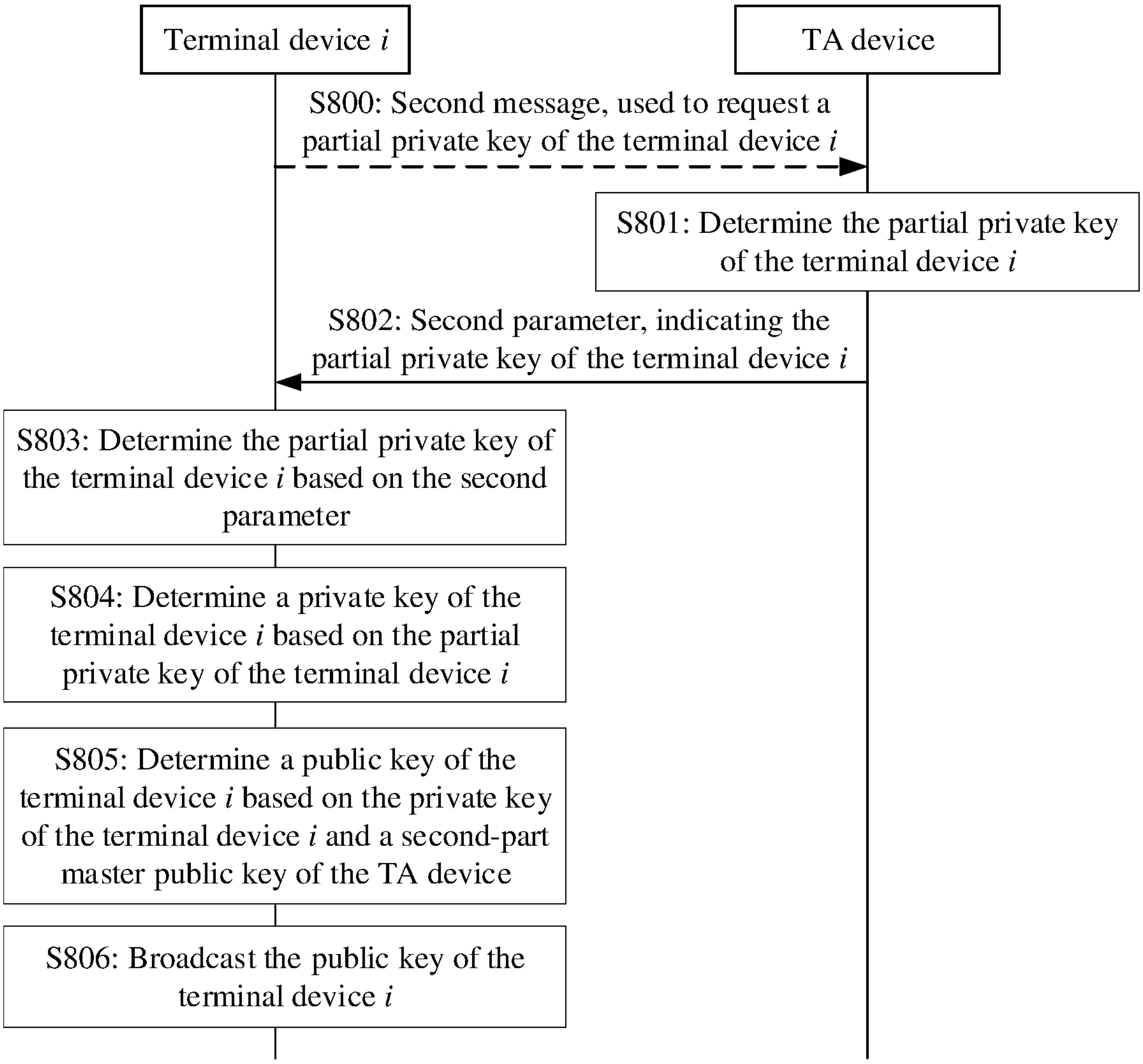
Terminal device *i*
TA device
S800: Second message, used to request a partial private key of the terminal device *i*
S801: Determine the partial private key of the terminal device *i*
S802: Second parameter, indicating the partial private key of the terminal device *i*
S803: Determine the partial private key of the terminal device *i* based on the second parameter
S804: Determine a private key of the terminal device *i* based on the partial private key of the terminal device *i*
S805: Determine a public key of the terminal device *i* based on the private key of the terminal device *i* and a second-part master public key of the TA device
S806: Broadcast the public key of the terminal device *i*

FIG. 8

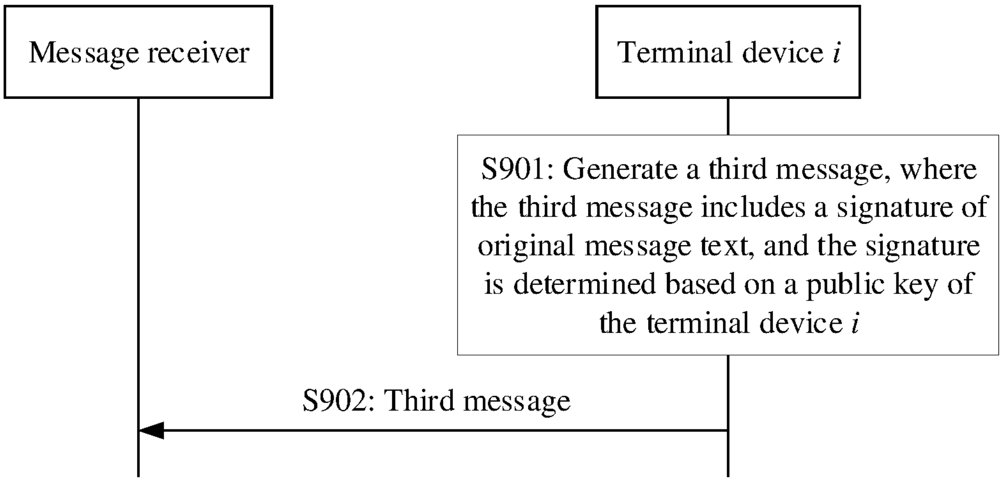
Message receiver
Terminal device *i*
S901: Generate a third message, where the third message includes a signature of original message text, and the signature is determined based on a public key of the terminal device *i*
S902: Third message

FIG. 9

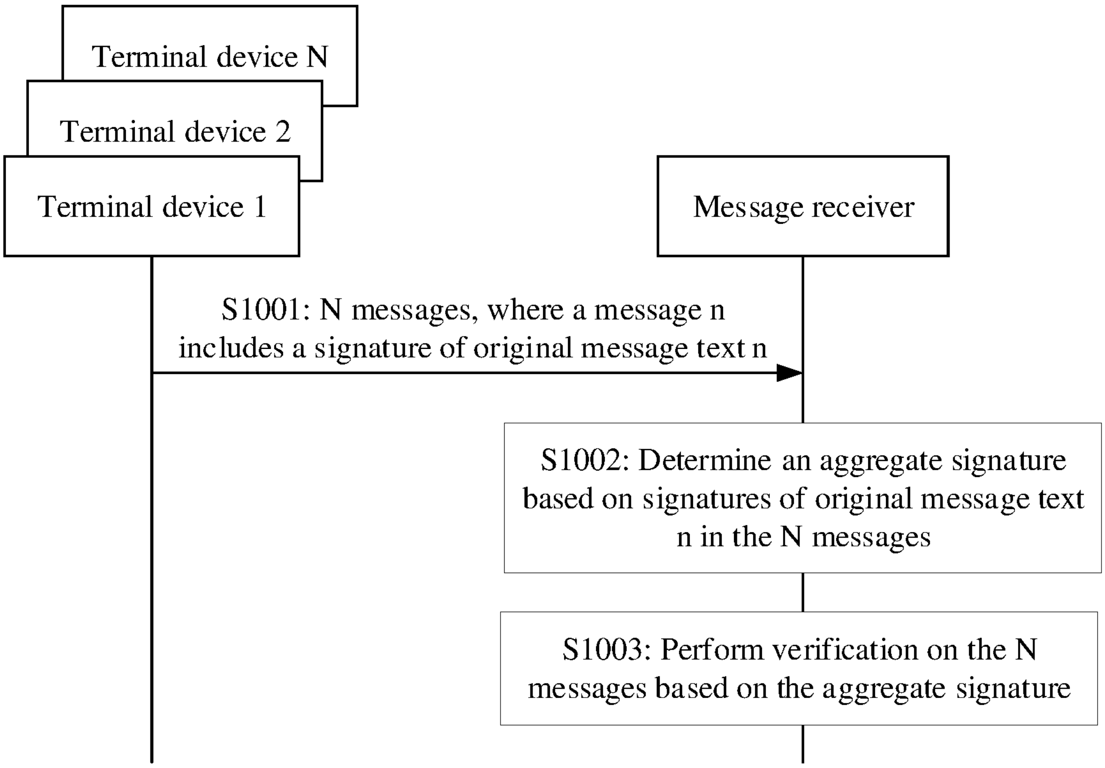
Terminal device N
Terminal device 2
Terminal device 1
Message receiver
S1001: N messages, where a message n includes a signature of original message text n
S1002: Determine an aggregate signature based on signatures of original message text n in the N messages
S1003: Perform verification on the N messages based on the aggregate signature

FIG. 10

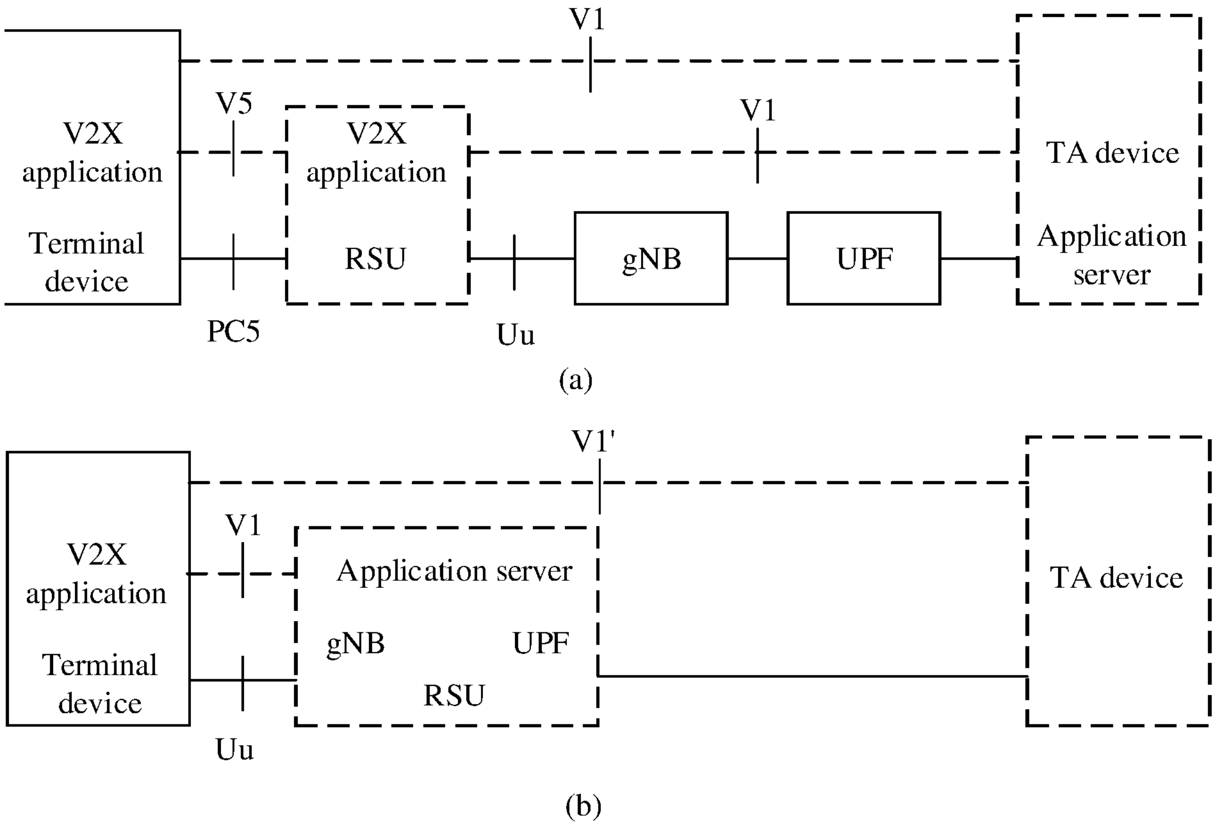
V1
V5
V2X
application
V2X
application
V1
TA device
Terminal
device
RSU
gNB
UPF
Application
server
PC5
Uu
(a)
V1'
V1
V2X
application
Application server
TA device
gNB
UPF
Terminal
device
RSU
Uu
(b)

FIG. 11

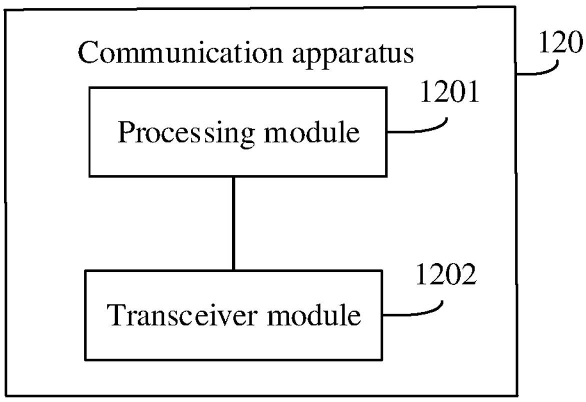
Communication apparatus
120
1201
Processing module
1202
Transceiver module

FIG. 12

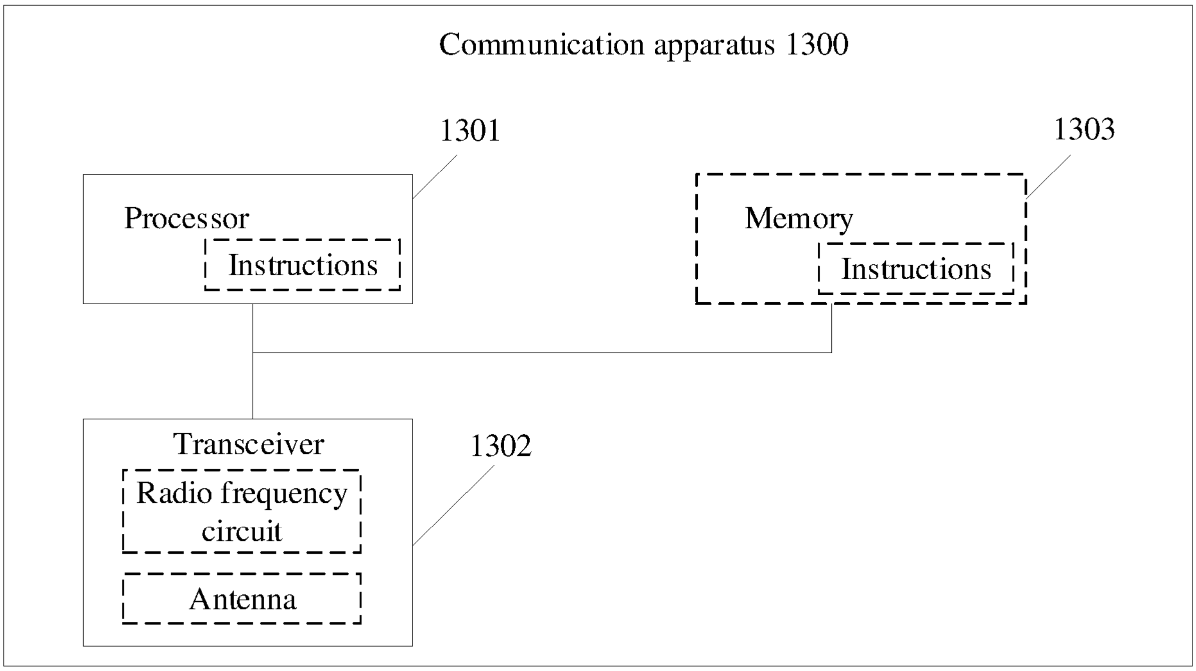
Communication apparatus 1300
1301
1303
Processor
Instructions
Memory
Instructions
Transceiver
Radio frequency circuit
Antenna
1302

FIG. 13

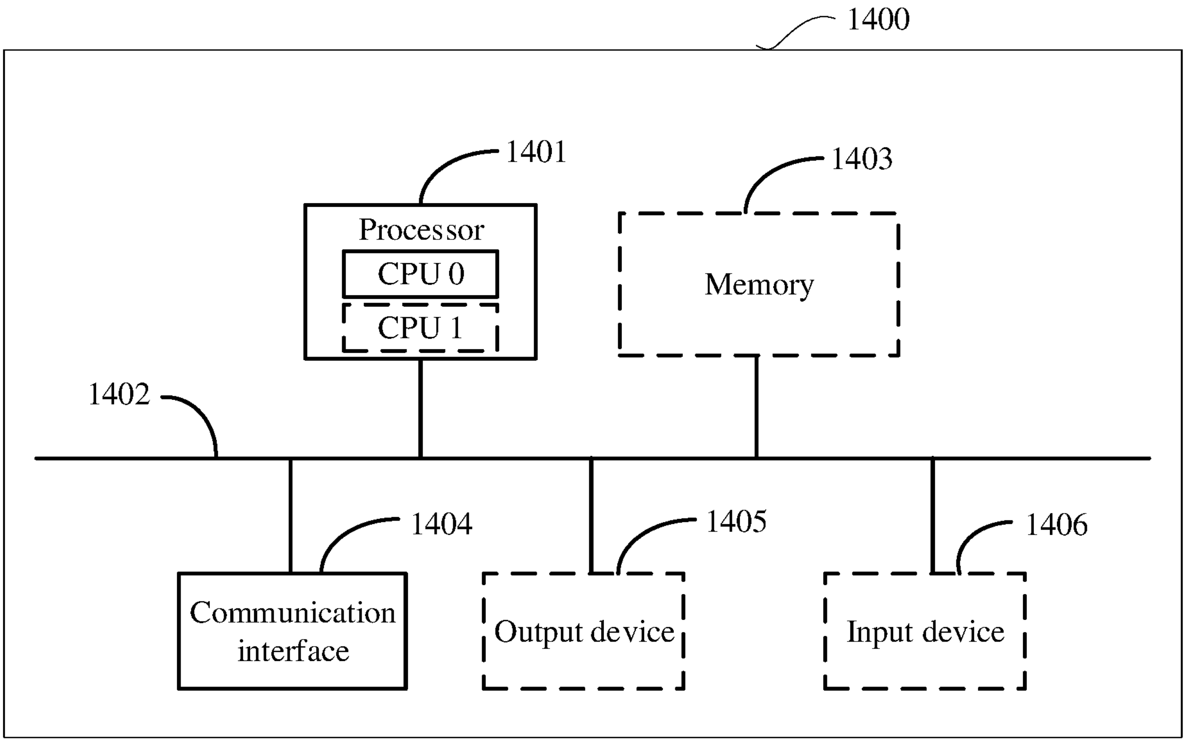
1400
1401
1403
Processor
CPU 0
CPU 1
Memory
1402
1404
1405
1406
Communication interface
Output device
Input device

FIG. 14

## INTERNATIONAL SEARCH REPORT

International application No.
**PCT/CN2023/075260**

**A. CLASSIFICATION OF SUBJECT MATTER**

H04L9/40(2022.01)i；H04L12/02(2006.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

VCN, VEN, CNTXT, ENTXT, IEEE, CNKI: 区块链, blockchain, V2X, VANET, 车联网, RSU, TA, 假名, PID, 实名, RID, 虚拟, 伪, 隐私, 签名, Virtual, pseudo, privacy, safe, signature, SMT

**C. DOCUMENTS CONSIDERED TO BE RELEVANT**

| Category* | Citation of document, with indication, where appropriate, of the relevant passages | Relevant to claim No. |
|---|---|---|
| X | CN 115604698 A (GUANGDONG UNIVERSITY OF TECHNOLOGY) 13 January 2023 (2023-01-13) description, paragraphs 39-82 | 1-17, 31-47, 61-64 |
| X | CN 114584976 A (NORTHEASTERN UNIVERSITY) 03 June 2022 (2022-06-03) description, paragraphs 67-105 | 18-30, 48-64 |
| A | WO 2022082893 A1 (THE CHINESE UNIVERSITY OF HONG KONG, SHENZHEN) 28 April 2022 (2022-04-28) entire document | 1-64 |
| A | 黄海旭 (HUANG, Haixu). "基于匿名认证的车联网安全技术研究 (IoV Security Technology based on Anonymous Authentication)" *通信技术 (Communications Technology),* Vol. 53, No. 02, 29 February 2020 (2020-02-29), entire document | 1-64 |
| A | YAO, Yingying et al. "BLA: Blockchain-Assisted Lightweight Anonymous Authentication for Distributed Vehicular Fog Services" *IEEE INTERNET OF THINGS JOURNAL,* Vol. 6, No. 2, 30 April 2019 (2019-04-30), entire document | 1-64 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 October 2023** | **23 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/075260**

| Patent document cited in search report | | | Publication date (day/month/year) | Patent family member(s) | | | Publication date (day/month/year) |
|---|---|---|---|---|---|---|---|
| CN | 115604698 | A | 13 January 2023 | None | | | |
| CN | 114584976 | A | 03 June 2022 | None | | | |
| WO | 2022082893 | A1 | 28 April 2022 | CN | 112367305 | A | 12 February 2021 |

Form PCT/ISA/210 (patent family annex) (July 2022)